# EUROPEAN PATENT APPLICATION

(11) **EP 3 358 822 A1**
(43) Date of publication of application: **08.08.2018**
(21) Application number: 16851663.1
(22) Date of filing: 28.09.2016
(51) Int. Cl.: H04N 5/232, G03B 15/00, H04N 5/353

(54) **IMAGING DEVICE AND IMAGE PROCESSING DEVICE**

(30) Priority: 30.09.2015 JP 2015195137
(71) Applicant: Nikon Corporation, Tokyo 108-6290 (JP)
(72) Inventor: SHIONOYA, Takashi, Tokyo 108-6290 (JP); KANBARA, Toshiyuki, Tokyo 108-6290 (JP); SEKIGUCHI, Naoki, Tokyo 108-6290 (JP)
(74) Representative: Hoffmann Eitle
(86) International application number: PCT/JP2016/078683
(87) International publication number: WO 2017/057492

(57) **Abstract**

An image capturing device includes: an image capturing element having an image capturing area that captures an image of a photographic subject, in which a first pixel that outputs a signal of charges generated by photoelectric conversion and a second pixel, different from the first pixel, that outputs a signal of charges generated by photoelectric conversion of charge are disposed; a setting unit that sets an image capture condition for a first region of the image capturing area in which the first pixel is disposed and an image capture condition for a second region of the image capturing area, different from the first region, in which the second pixel is disposed; a selection unit that selects a pixel to be employed for interpolation of the first pixel of the first region to which a first image capture condition is set by the setting unit, from the second pixel of the second region to which a second image capture condition that is different from the first image capture condition is set by the setting unit, and the second pixel of the second region to which a third image capture condition that is different from the second image capture condition is set by the setting unit; and a generation unit that generates an image of at least a part of a photographic subject that has been captured on the image capturing area by employing the signal that is outputted from the first pixel of the first region to which the first image capture condition is set, and that is interpolated with the signal outputted from the second pixel selected by the selection unit.

## Description

### TECHNICAL FIELD

The present invention relates to an image capturing device and to an image processing device.

### BACKGROUND ART

An image capturing device is per se known (refer to Patent Document #1) that is equipped with an imaging element that is capable of setting different image capture conditions for each of various regions of the screen. However there has been the problem that, image data that has been generated for regions for which the image capture conditions are different cannot be treated in a similar manner to image data generated for regions for all of which the image capture conditions are the same.

### CITATION LIST

### PATENT LITERATURE

Patent Document #1: Japanese Laid-Open Patent Publication No. 2006-197192

### SUMMARY OF INVENTION

An image capturing device according to a first aspect of the present invention, comprises: an image capturing element comprising an image capturing area that captures an image of a photographic subject, in which a first pixel that outputs a signal of charges generated by photoelectric conversion and a second pixel, different from the first pixel, that outputs a signal of charges generated by photoelectric conversion of charge are disposed; a setting unit that sets an image capture condition for a first region of the image capturing area in which the first pixel is disposed and an image capture condition for a second region of the image capturing area, different from the first region, in which the second pixel is disposed; a selection unit that selects a pixel to be employed for interpolation of the first pixel of the first region to which a first image capture condition is set by the setting unit, from the second pixel of the second region to which a second image capture condition that is different from the first image capture condition is set by the setting unit, and the second pixel of the second region to which a third image capture condition that is different from the second image capture condition is set by the setting unit; and a generation unit that generates an image of at least a part of a photographic subject that has been captured on the image capturing area by employing the signal that is outputted from the first pixel of the first region to which the first image capture condition is set, and that is interpolated with the signal outputted from the second pixel selected by the selection unit.

An image capturing device according to a second aspect of the present invention, comprises: a first image capturing element that comprises a first image capturing area that captures an image of a photographic subject, in which a first pixel that outputs a signal of charges generated by photoelectric conversion and a second pixel, different from the first pixel, that outputs a signal of charges generated by photoelectric conversion are disposed; a second image capturing element that is different from the first image capturing element, and comprises a second image capturing area that captures an image of the photographic subject, in which a third pixel that outputs a signal of charges generated by photoelectric conversion is disposed; a selection unit that selects a pixel to be employed for interpolation of the first pixel, from the second pixel and the third pixel; and a generation unit that generates an image of at least a part of the photographic subject that has been captured on the first image capturing area by employing the signal that is outputted from the first pixel and that is interpolated with the signal outputted from the pixel selected by the selection unit.

An image capturing device according to a third aspect of the present invention, comprises: an image capturing element that comprises an image capturing area that captures an image of a photographic subject, in which a first pixel that outputs a signal of charges generated by photoelectric conversion and a second pixel, different from the first pixel, that outputs a signal of charges generated by photoelectric conversion; setting unit that sets an image capture condition for a first region of the image capturing area in which the first pixel is disposed and an image capture condition for a second region of the image capturing area, different from the first region, in which the second pixel is disposed; a selection unit that selects a pixel to be employed for signal processing of the signal outputted from the first pixel of the first region to which a first image capture condition is set by the setting unit, from the second pixel of the second region to which a second image capture condition that is different from the first image capture condition is set by the setting unit, and the second pixel of the second region to which a third image capture condition that is different from the second image capture condition is set by the setting unit; and a generation unit that generates an image of at least a part of a photographic subject that has been captured on the image capturing area by employing the signal that is outputted from the first pixel of the first region to which the first image capture condition is set, and that is processed with the signal outputted from the second pixel selected by the selection unit.

An image capturing device according to a fourth aspect of the present invention, comprises: a first image capturing element that comprises a first image capturing area that captures an image of a photographic subject, in which are disposed a first pixel that generates a signal of charges by photoelectric conversion and a second pixel, different from the first pixel, that generates a signal of charges by photoelectric conversion; a second image capturing element that is different from the first image capturing element, and that comprises a second image capturing area that captures an image of the photographic subject, in which a third pixel that outputs a signal of charges generated by photoelectric conversion is disposed; a selection unit that selects a pixel to be employed for signal processing of the signal outputted from the first pixel, from the second pixel and the third pixel; and a generation unit that generates an image of at least a part of the photographic subject that has been captured on the first image capturing area by employing the signal that is outputted from the first pixel, and that is processed with the signal outputted from the pixel selected by the selection unit.

An image processing device according to a fifth aspect of the present invention, comprises: a selection unit that selects a pixel to be employed for interpolation of a first pixel that is disposed in a first region of an image capturing area of an image capturing element to which a first image capture condition is set, from a second pixel that is disposed in a second region of the image capturing area to which a second image capture condition that is different from the first image capture condition is set, and the second pixel that is disposed in the second region to which a third image capture condition that is different from the second image capture condition is set; and a generation unit that generates an image of at least a part of a photographic subject that has been captured on the image capturing area by employing a signal that is outputted from the first pixel of the first region to which the first image capture condition is set, and that is interpolated with a signal outputted from the second pixel selected by the selection unit.

An image processing device according to a sixth aspect of the present invention, comprises: a selection unit that selects a pixel to be employed for interpolation of a first pixel that is disposed in a first image capturing area of a first image capturing element, from a second pixel that is disposed in the first image capturing area and that is different from the first pixel, and a third pixel that is disposed in a second image capturing area of a second image capturing element that is different from the first image capturing element; and a generation unit that generates an image of at least a part of a photographic subject that has been captured on the first image capturing area by employing a signal that is outputted from the first pixel, and that is interpolated with a signal outputted from the pixel selected by the selection unit.

An image processing device according to a seventh aspect of the present invention, comprises: a selection unit that selects a pixel to be employed for signal processing of a signal outputted from a first pixel that is disposed in a first region of an image capturing area of an image capturing element to which a first image capture condition is set, from a second pixel that is disposed in a second region of the image capturing area to which a second image capture condition that is different from the first image capture condition is set, and the second pixel that is disposed in the second region to which a third image capture condition that is different from the second image capture condition is set; and a generation unit that generates an image of at least a part of a photographic subject that has been captured on the image capturing area by employing a signal that is outputted from the first pixel of the first region to which the first image capture condition is set, and that is processed with a signal outputted from the second pixel selected by the selection unit.

An image processing device according to an eighth aspect of the present invention, comprises: a selection unit that selects a pixel to be employed for signal processing of a signal outputted from a first pixel that is disposed in a first image capturing area of a first image capturing element, from a second pixel that is disposed in the first image capturing area and that is different from the first pixel, and a third pixel that is disposed in a second image capturing area of a second image capturing element that is different from the first image capturing element; and a generation unit that generates an image of at least a part of a photographic subject that has been captured on the first image capturing area by employing a signal that is outputted from the first pixel, and that is processed with a signal outputted from the pixel selected by the selection unit.

### BRIEF DESCRIPTION OF DRAWINGS

Fig. 1 is a block diagram showing an example of the structure of a camera according to an embodiment;
Fig. 2 is a sectional view of a laminated type imaging element;
Fig. 3 is a figure for explanation of the arrangement of pixels upon an imaging chip, and of unit regions thereof;
Fig. 4 is a figure for explanation of circuitry of a unit region;
Fig. 5 is a figure schematically showing an image of a photographic subject that is formed upon the imaging element of the camera;
Fig. 6 is a figure showing an example of a screen for setting image capture conditions;
Fig. 7(a) is a figure showing an example of the vicinity of a boundary of a first region in a live view image, Fig. 7(b) is a figure showing the vicinity of the boundary in an enlarged view, Fig. 7(c) is an enlarged view of a pixel for attention and of reference pixels, and Fig. 7(d) is an enlarged view of reference pixels corresponding to image data for processing;
Fig. 8(a) is a figure showing an example of an arrangement of photoelectrically converted signals outputted from the pixels, Fig. 8(9) is a figure for explanation of interpolation of the G color component, and Fig. 8(c) is a figure showing an example of the image data for the G color component after interpolation;
Fig. 9(a) is a figure in which the image data of the R color component has been extracted from Fig. 8(a), Fig. 9(b) is a figure for explanation of interpolation of the color difference component Cr, and Fig. 9(c) is a figure for explanation of interpolation of the image data of the color difference component Cr;
Fig. 10(a) is a figure in which the image data of the B color component has been extracted from Fig. 8(a), Fig. 10(b) is a figure for explanation of interpolation of the color difference component Cb, and Fig. 10(c) is a figure for explanation of interpolation of the image data of the color difference component Cb;
Fig. 11 is a figure showing an example of positioning of pixels for focus detection in an image capturing surface;
Fig. 12 is a figure showing a partial region of a focus detection pixel line in an enlarged view;
Fig. 13 is a figure showing an enlarged view of a point for focusing;
Fig. 14(a) is a figure showing an example of a template image representing an object that is to be detected, and Fig. 14(b) is a figure showing an example of a live view image and a search range;
Fig. 15 is a figure showing an example of the relationship between the timing of capture of image data for the live view image and the timing of capture of image data for processing: Fig. 15(a) shows an example of a case in which the live view image and the image data for processing are captured alternately, Fig. 15(b) shows an example of a case in which the image data for processing is captured when starting the display of the live view image, and Fig. 15(c) shows an example of a case in which the image data for processing is captured when ending the display of the live view image;
Fig. 16 is a flow chart for explanation of the flow of processing for setting image capture conditions for each region individually and performing image capturing;
Figs. 17(a) through 17(c) are figures showing various examples of arrangement of a first region and a second region in the image capturing surface of the imaging element;
Fig. 18 is a block diagram showing an example of the structure of a camera according to a variation 2;
Fig. 19 is a block diagram showing an example of the structure of an image capturing system according to a variation 6; and
Fig. 20 is a figure for explanation of provision of a program to a mobile device.

### DESCRIPTION OF EMBODIMENTS

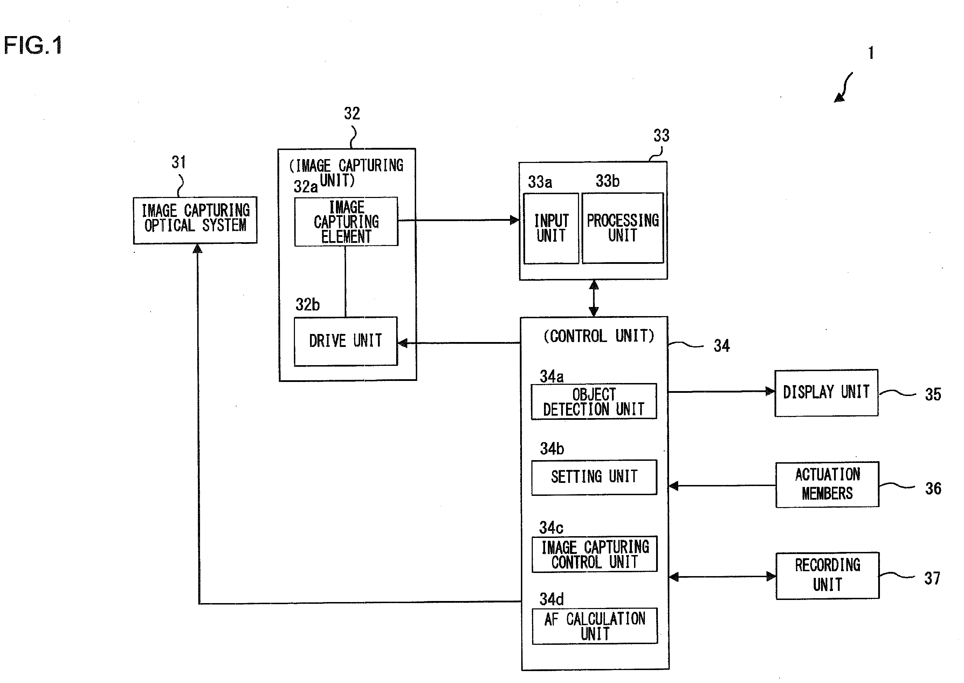

As one example of an electronic device that is equipped with an image processing device according to an embodiment of the present invention, an example of a digital camera will now be explained. A camera 1 (refer to Fig. 1) is built so as to be capable of performing image capture under different conditions for each of several regions of an image capturing surface of an imaging element or image capturing element 32a. An image processing unit 33 performs respectively appropriate processing for the various regions for which the image capture conditions are different. The details of a camera 1 of this type will now be explained with reference to the drawings.

### Explanation of the Camera

Fig. 1 is a block diagram showing an example of the structure of the camera 1 according to this embodiment. In Fig. 1, the camera 1 comprises an image capturing optical system 31, an image capturing unit 32, the image processing unit 33, a control unit 34, a display unit 35, actuation members 36, and a recording unit 37.

The image capturing optical system 31 conducts a light flux from the photographic field to the image capturing unit 32. This image capturing unit 32 includes the imaging element 32a and a drive unit 32b, and photoelectrically converts an image of the photographic subject that has been formed by the image capturing optical system 31. The image capturing unit 32 is capable of performing image capturing in the entire area of the image capturing surface of the imaging element 32a under the same conditions, and is also capable of performing image capturing in each of various regions of the image capturing surface of the imaging element 32a under conditions that are mutually different. The details of this image capturing unit 32 will be described hereinafter. And the drive unit 32b generates a drive signal that is required for causing the image capturing element 32a to perform charge accumulation control. Image capture commands to the image capturing unit 32 for specifying charge accumulation time and so on are transmitted to the drive unit 32b from the control unit 34.

The image processing unit 33 comprises an input unit 33a and a processing unit 33b. Image data acquired by the image capturing unit 32 is inputted to the input unit 33a. And, in a case in which the main image capture is performed under different image capture conditions for different regions, the processing unit 33b performs predetermined image processing upon the main image data by employing image data that has been captured separately from the main image data, thereby generating an image. This image processing may, for example, include color interpolation processing, pixel defect correction processing, contour emphasis processing, noise reduction processing, white balance adjustment processing, gamma correction processing, display brightness adjustment processing, saturation adjustment processing, and so on.

The control unit 34 is, for example, constituted of a CPU, and controls the overall operation of the camera 1. For example, the control unit 34 may perform predetermined exposure calculation on the basis of the photoelectrically converted signals acquired by the image capturing unit 32, thus determining exposure conditions required for the imaging element 32a to perform appropriate exposure, such as charge accumulation time (i.e. exposure time), an aperture value for the image capturing optical system 31, ISO sensitivities, and so on, and may send corresponding commands to the drive unit 32b. Furthermore, according to the scene imaging mode set on the camera 1 and/or the types of photographic subject elements that have been detected, the control unit 34 may determine image processing conditions for adjustment of saturation, contrast, sharpness, and so on, and may send corresponding commands to the image processing unit 33. This detection of photographic subject elements will be described hereinafter.

The control unit 34 comprises an object detection unit 34a, a setting unit 34b, an image capturing control unit 34c, and an AF calculation unit 34d. These units may be implemented in software by the control unit 34 executing a program stored in a non-volatile memory not shown in the figures, or may be implemented with ASICs or the like.

From the image acquired by the image capturing unit 32, by performing per se known object recognition processing, the object detection unit 34a detects photographic subject elements such as people (i.e. human faces), animals such as dogs or cats or the like (i.e. animal faces), plants, vehicles such as bicycles, automobiles, trains or the like, stationary objects such as buildings, scenery elements such as mountains, clouds or the like, and/or objects whose specifications have been determined in advance. And the setting unit 34b divides the imaging screen at the image capturing unit 32 into a plurality of regions that include these photographic subject elements that have been detected as described above.

Furthermore, the setting unit 34b sets image capture conditions for each of this plurality of regions. Such image capture conditions may include the exposure conditions described above (charge accumulation time, ISO sensitivity, frame rate, and so on) and the image processing conditions described above (for example, a parameter for white balance adjustment, a gamma correction curve, a parameter for display brightness adjustment, a saturation adjustment parameter, and so on). It should be understood that it would be possible to set the same image capture conditions for all of the plurality of regions; or, alternatively, it would be also possible to set different image capture conditions for each different region of the plurality of regions.

The image capturing control unit 34c controls the image capturing unit 32 (i.e. the imaging element 32a) and the image processing unit 33 by applying the image capture conditions that have been set for each of the regions by the setting unit 34b. Due to this, it is possible to cause the image capturing unit 32 to perform image capture under exposure conditions that are different for each of the plurality of regions, and it is also possible to cause the image processing unit 33 to perform image processing under image processing conditions that are different for each of the plurality of regions. Any number of pixels may be included in each region; for example a region may include 1000 pixels, or a region may include only 1 pixel. Moreover, the numbers of pixels in different regions may be different.

The AF calculation unit 34d controls the automatic focus adjustment operation (auto-focus: AF) to adjust the focus at a predetermined position on the imaging screen (termed the "point for focusing") to the corresponding photographic subject. And, on the basis of the calculation result, the AF calculation unit 34d sends a drive signal for shifting a focusing lens of the image capturing optical system 31 to an appropriate focusing position. The processing that the AF calculation unit 34d performs for automatic focus adjustment is termed "focus detection processing". The details of this focus detection processing will be described hereinafter.

The display unit 35 reproduces and displays images that have been generated by the image processing unit 33, images that have been image processed, images that have been read out by the recording unit 37, and so on. And the display unit 35 also displays an actuation menu screen, a setting screen for setting image capture conditions, and so on.

The actuation members 36 include actuation members of various types, such as a release button and a menu button and so on. And, corresponding to actuations of various types, the actuation members 36 send actuation signals to the control unit 34. The actuation members 36 also include a touch actuation member that is provided to a display surface of the display unit 35.

According to a command from the control unit 34, the recording unit 37 records image data and so on upon a recording medium consisting of a memory card or the like, not shown in the figures. Moreover, according to a command from the control unit 34, the recording unit 37 also reads out image data recorded upon the recording medium.

### Explanation of the Laminated Type Imaging Element

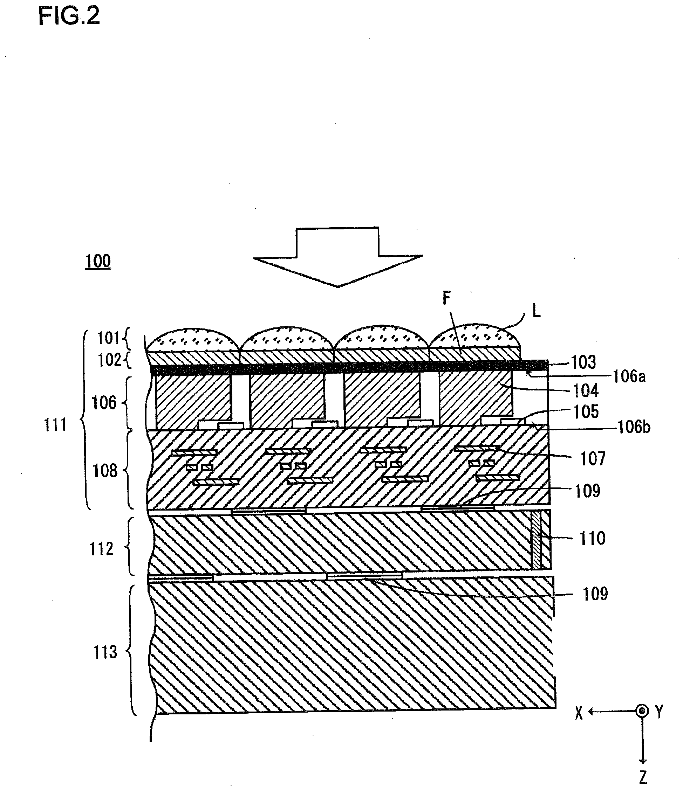

As one example of the imaging element 32a described above, a laminated or stacked imaging element 100 will now be explained. Fig. 2 is a sectional view of this imaging element 100. The imaging element 100 comprises an image capturing chip 111, a signal processing chip 112, and a memory chip 113. The image capturing chip 111 is laminated to the signal processing chip 112. And the signal processing chip 112 is laminated to the memory chip 113. The image capturing chip 111 and the signal processing chip 112, and similarly the signal processing chip 112 and the memory chip 113, are electrically connected together by connecting portions 109. These connecting portions 109 may, for example, be bumps or electrodes. The image capturing chip 111 captures an optical image from the photographic subject, and generates image data. And the image capturing chip 111 outputs this image data to the signal processing chip 112 from the image capturing chip 111. The signal processing chip 112 performs signal processing on the image data outputted from the image capturing chip 111. Moreover, the memory chip 113 comprises a plurality of memories, and stores image data. It should be understood that it would also be acceptable for the imaging element 100 to comprise only an image capturing chip and a signal processing chip. If the imaging element 100 thus comprises only an image capturing chip and a signal processing chip, then a storage unit for storage of the image data may be provided at the signal processing chip, or may be provided separately from the imaging element 100.

As shown in Fig. 2, the incident light is mainly incident in the +Z axis direction, as shown by the white arrow sign. Moreover, as shown by the coordinate axes in the figure, the direction orthogonal to the Z axis and leftward on the drawing paper is taken as being the +X axis direction, and the direction orthogonal to both the Z axis and the X axis and toward the viewer from the drawing paper is taken as being the +Y axis direction. Coordinate axes are shown in some of the subsequent figures, so that the orientation of those figures with reference to the coordinate axes of Fig. 2 can be understood.

The image capturing chip 11 may, for example, be a CMOS image sensor. In concrete terms, the image capturing chip 111 may be a CMOS image sensor of the backside illumination type. The image capturing chip 111 comprises a micro-lens layer 101, a color filter layer 102, a passivation layer 103, a semiconductor layer 106, and a wiring layer 108. And, in the image capturing chip 111, the micro-lens layer 101, the color filter layer 102, the passivation layer 103, the semiconductor layer 106, and the wiring layer 108 are arranged in that order along the +Z axis direction.

The micro-lens layer 101 includes a plurality of micro-lenses L. The micro-lenses L condense the incident light onto photoelectric conversion units 104 that will be described hereinafter. The color filter layer 102 includes a plurality of color filters F. That is, the color filter layer 102 includes color filters F of a plurality of types having different spectral characteristics. In concrete terms, the color filter layer 102 includes first filters (R) that have the spectral characteristic of principally passing light having a red color component, second filters (Gb and Gr) that have the spectral characteristic of principally passing light having a green color component, and third filters (B) that have the spectral characteristic of principally passing light having a blue color component. In the color filter layer 102, for example, the first filters, the second filters, and the third filters may be arranged as a Bayer array. And the passivation layer 103 is formed as a nitride film or an oxide film, and protects the semiconductor layer 106.

The semiconductor layer 106 includes photoelectric conversion units 104 and readout circuits 105. In detail, the semiconductor layer 106 comprises a plurality of photoelectric conversion units 104 between its first surface 106a, which is its surface upon which light is incident, and its second surface 106b, which is its surface on the side opposite to the first surface 106. In the semiconductor layer 106, the plurality of photoelectric conversion units 104 are arranged along the X axis direction and along the Y axis direction. The photoelectric conversion units 104 are endowed with a photoelectric conversion function of converting light into electrical charge. Moreover, the photoelectric conversion units 104 accumulate the charges of these photoelectrically converted signals. The photoelectric conversion units 104 may, for example, be photo-diodes. The semiconductor layer 106 contains the readout circuits 105 in positions closer to its second surface 106b than the photoelectric conversion units 104. The readout circuits 105 are arranged in the semiconductor layer 106 along the X axis direction and the Y axis direction in the semiconductor layer 106. Each of the readout circuits 105 is built from a plurality of transistors, and reads out and outputs to the wiring layer 108 the image data generated by the charges that have been photoelectrically converted by the corresponding photoelectric conversion unit 104.

The wiring layer 108 comprises a plurality of metallic layers. The metallic layers may, for example, be Al wiring or Cu wiring or the like. Image data that has been read out by the readout circuits 105 is outputted via the wiring layer 108. This image data is outputted from the wiring layer 108 to the signal processing chip 112 via the connecting portions 109.

It should be understood that one of the connecting portions 109 may be provided for each of the photoelectric conversion units 104. Moreover, it would also be acceptable for each one of the connecting portions 109 to be provided to a group of the photoelectric conversion units 104. If each of the connection portions 109 is provided to a group of the photoelectric conversion units 104, then the pitch of the connecting portions 109 may be greater than the pitch of the photoelectric conversion units 104. Furthermore, the connecting portions 109 may be provided in a region that is peripheral to the region where the photoelectric conversion units 104 are disposed.

The signal processing chip 112 comprises a plurality of signal processing circuits. These signal processing circuits perform signal processing on the captured image data outputted from the image capturing chip 111. The signal processing circuits may, for example, be amplifier circuits that amplify the signal values of the captured image data, correlated double sampling circuits that perform noise reduction processing on the image data, analog/digital (A/D) conversion circuits that convert analog signals to digital signals, and so on. One of the signal processing circuits may be provided for each of the photoelectric conversion units 104.

Furthermore, each of the signal processing circuits may be provided to a group of the photoelectric conversion units 104. The signal processing chip 112 has a plurality of through electrodes or vias 110. These vias 110 may, for example, be through-silicon vias. The vias 110 connect circuits that are provided on the signal processing chip 112 to one another. The vias 110 may also be provided to the peripheral regions of the image capturing chip 111 and to the memory chip 113. It should be understood that it would also be acceptable to provide some of the elements included in the signal processing circuit on the image capturing chip 111. For example, in the case of the analog/digital circuit, a comparator that performs comparison of the input voltage to a reference voltage may be provided at the image capturing chip 111, and circuitry such as a counter circuit and/or a latch circuit and so on may be provided at the signal processing chip 112.

The memory chip 113 comprises a plurality of storage units. These storage units store image data that has been subjected to signal processing by the signal processing chip 112. The storage units may, for example, be volatile memories such as DRAMs or the like. One of the storage units may be provided for each of the photoelectric conversion units 104. Alternatively, each one of the storage units may be provided to a group of the photoelectric conversion units 104. The image data stored in the storage units is outputted to the image processing unit at a subsequent stage.

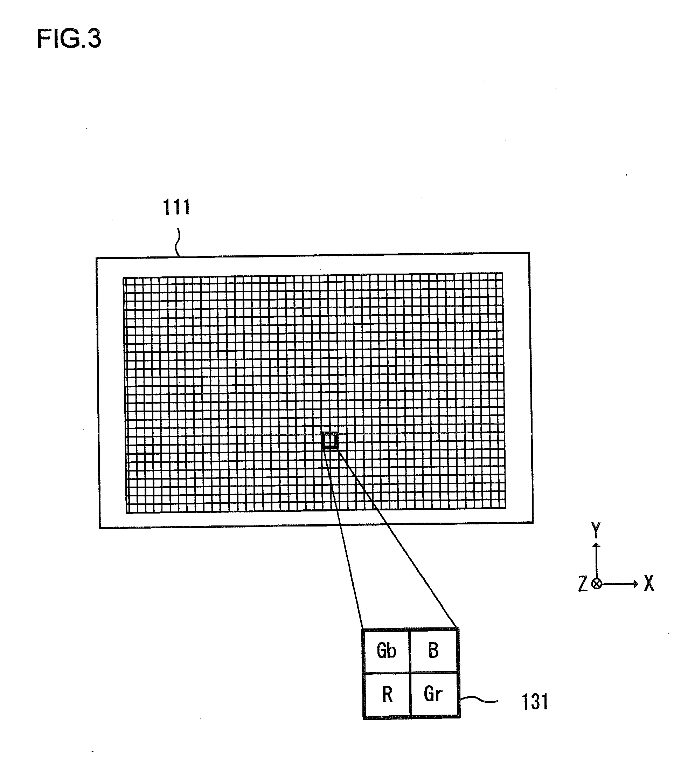

Fig. 3 is a figure for explanation of the arrangement of pixels on the image capturing chip 111, and for explanation of unit regions 131 thereof. In particular, this figure shows a situation in which the image capturing chip 111 is being viewed from its rear surface (i.e. from its image capturing surface). In the pixel region, for example, at least 20 million pixels may be arranged in the form of a matrix. In the Fig. 3 example, four adjacent pixels constitute a single unit region 131 that is 2 pixels × 2 pixels. The lattice grid in the figure illustrates the concept that adjacent pixels are grouped together to form the unit regions 131. The number of pixels that constitute one unit region 131 is not limited to being four as above; it would be acceptable for this number to be around a thousand, for example for the unit region to be 32 pixels × 32 pixels; and the number could be greater than that or less than that; the unit region could even be a single pixel.

As shown in the partial enlarged view of the pixel region, the unit region 131 in Fig. 3 is formed as a so-called Bayer array that consists of two green color pixels Gb and Gr, a blue color pixel B, and a red color pixel R. The green color pixels Gb and Gr are pixels that have green color filters as their color filters F, and that receive light of green color wavelength in the incident light. In a similar manner, the blue color pixels B are pixels that have blue color filters as their color filters F, and that receive light of blue color wavelength in the incident light, and the red color pixels R are pixels that have red color filters as their color filters F, and that receive light of red color wavelength in the incident light.

In this embodiment, a plurality of blocks are defined so that at least one of the unit regions 131 is included in each block. In other words, the minimum unit in each block is a single unit region 131. As described above, among the values that can be taken as the number of pixels forming a single unit region 131, the smallest number of pixels is a single pixel. Accordingly, if one block is defined in terms of pixel units, among the number of pixels that can define one block, the minimum number of pixels is a single pixel. The pixels that are included in one block can be controlled with control parameters that are different from another block. That is, in each block, all of the unit regions 131 within that block, in other words all of the pixels within that block, are controlled with the same image capture conditions. In other words, photoelectrically converted signals for which the image capture conditions are different can be acquired for the pixel group included in one block and for the pixel group included in a different block. Examples of control parameters are frame rate, gain, decimation ratio, number of rows or number of columns for adding the photoelectrically converted signals, charge accumulation time or accumulation number, number of bits for digitization (i.e. word length), and so on. The imaging element 100 not only can freely perform decimation in the row direction (i.e. in the X axis direction of the image capturing chip 111), but can also freely perform decimation in the column direction (i.e. in the Y axis direction of the image capturing chip 111). Furthermore, the control parameter may include parameters for the image processing.

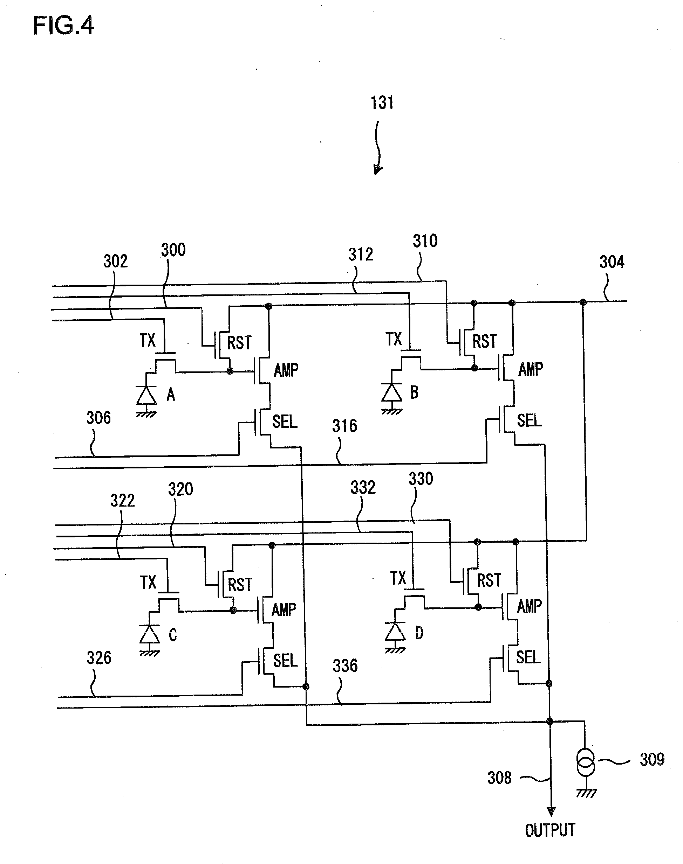

Fig. 4 is a figure for explanation of the circuitry for a single unit region 131. In the Fig. 4 example, a single unit region 131 consists of four adjacent pixels, that is 2 pixels × 2 pixels. It should be understood that the number of pixels included in one unit region 131 is not limited to being four as above; it would be acceptable for this number to be a thousand or more, and at a minimum it could even be a single pixel. The two dimensional positions in the unit region 131 are designated in Fig. 4 by the reference symbols A through D.

Reset transistors (RST) of the pixels included in the unit region 131 are adapted to be capable of being turned on and off individually for each pixel. In Fig. 4, reset wiring 300 is provided for turning the reset transistor of the pixel A on and off, and reset wiring 310 for turning the reset transistor of the pixel B on and off is provided separately from the above described reset wiring 300. Similarly, reset wiring 320 for turning the reset transistor of the pixel C on and off is provided separately from the reset wiring 300 and the reset wiring 310. And, similarly, dedicated reset wiring 330 is also provided for turning the reset transistor of the other pixel D on and off.

Transfer transistors (TX) of the pixels included in the unit region 131 are also adapted to be capable of being turned on and off individually for each pixel. In Fig. 4, transfer wiring 302 for turning the transfer transistor of the pixel A on and off, transfer wiring 312 for turning the transfer transistor of the pixel B on and off, and transfer wiring 322 for turning the transfer transistor of the pixel C on and off are provided separately. And dedicated transfer wiring 332 is also provided for turning the transfer transistor of the other pixel D on and off.

Furthermore, selection transistors (SEL) of the pixels included in the unit region 131 are also adapted to be capable of being turned on and off individually for each pixel. In Fig. 4, selection wiring 306 for turning the selection transistor of the pixel A on and off, selection wiring 316 for turning the selection transistor of the pixel B on and off, and selection wiring 326 for turning the selection transistor of the pixel C on and off are provided separately. And dedicated selection wiring 336 is also provided for turning the selection transistor of the other pixel D on and off.

It should be understood that power supply wiring 304 is connected in common to all the pixels A through D included in the unit region 131. In a similar manner, output wiring 308 is connected in common to all the pixels A through D included in the unit region 131. Here, while the power supply wiring 304 is connected in common between a plurality of the unit regions, the output wiring 308 is provided separately for each of the unit regions 131. A load current source 309 supplies current to the output wiring 308. This load current source 309 may be provided at the image capturing chip 111, or may be provided at the signal processing chip 112.

By turning the reset transistors and the transfer transistors of the unit region 131 on and off individually, charge accumulation for the pixels A through D included in the unit region 131 can be controlled, with this control including their charge accumulation start timings, their charge accumulation end timings, and their transfer timings. Moreover, the photoelectrically converted signals from the pixels A through D can be outputted via the common output wiring 308 by turning the selection transistors of the unit region 131 individually on and off.

Here, a so called rolling shutter method is per se known for controlling charge accumulation by the pixels A through D included in the unit regions 131 in a regular sequence according to rows and columns. When columns are designated after pixels in each row are selected according to such a rolling shutter method, then, in the example of Fig. 4, the photoelectric conversion signals are outputted in the sequence "ABCD".

By constructing the circuitry based upon each of the unit regions 131 in this manner, the charge accumulation time for each unit region 131 can be individually controlled. To put it in another manner, photoelectrically converted signals at frame rates that are individually different for the respective unit regions 131 can be outputted. Furthermore, by performing charge accumulation (i.e. image capture) for the unit regions 131 that are included in a certain predetermined block on the image capturing chip 111, while idling the unit regions that are included in another block thereof, it is possible to perform image capture only for the certain predetermined block on the image capturing chip 111, and to output their photoelectrically converted signals. Yet further, it is also possible to output photoelectrically converted signals while changing over, between frames, the blocks for which charge accumulation (i.e. image capture) is performed (i.e. by changing over the blocks that are the subjects of charge accumulation control), thus performing image capture sequentially with different blocks of the image capturing chip 111.

As described above, the output wiring 308 is provided to correspond to each of the unit regions 131 individually. Since, in this imaging element 100, the image capturing chip 111, the signal processing chip 112, and the memory chip 113 are laminated together, accordingly, by employing electrical connections between the chips by using the connection portions 109 in the output wiring 308, it is possible to route the wiring without increasing the sizes of the chips in the surface direction.

### Block Control of the Imaging Element

In this embodiment, the image capture conditions are settable individually for each of the plurality of blocks on the imaging element 32a. The control unit 34 (i.e. the image capturing control unit 34c) establishes correspondence between the plurality of regions described above and the blocks described above, and performs image capture for each region under the image capture conditions that have been set for that region.

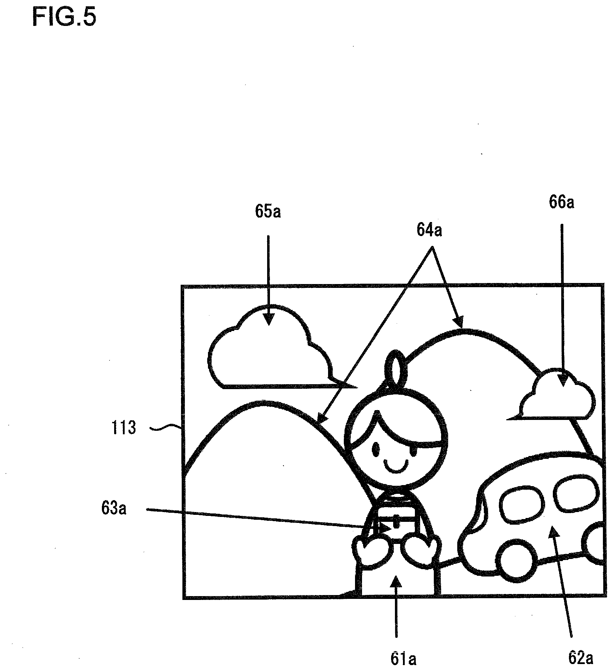

Fig. 5 is a figure schematically showing an image of a photographic subject that has been formed on the image capturing element 32a of the camera 1. Before the image capture command is executed, the camera 1 acquires a live view image by photoelectrically converting the image of the photographic subject. The term "live view image" refers to an image for monitoring that is repeatedly captured at a predetermined frame rate (for example at 60 fps).

Before the division into regions by the setting unit 34b, the control unit 34 sets the same image capture conditions for the entire area of the image capturing chip 111 (in other words, for the entire imaging screen). Here, the term "the same image capture conditions" refers to image capture conditions that are set in common for the entire imaging screen. The conditions in which, for example, the apex values vary by less than approximately 0.3 levels may be considered to be the same. These image capture conditions that are set to be the same over the entire area of the image capturing chip 111 are determined on the basis of exposure conditions corresponding to the photometric value of the luminance of the photographic subject, or on the basis of exposure conditions that have been set manually by the user.

In Fig. 5, an image that includes a person 61a, an automobile 62a, a bag 63a, mountains 64a, and clouds 65a and 66a is shown as formed on the image capturing surface of the image capturing chip 111. The person 61a is holding the bag 63a with both hands. And the automobile 62a is stopped behind the person 61a and to her right.

### Division into Regions

On the basis of the live view image, the control unit 34 divides the screen of the live view image into a plurality of regions in the following manner. First, elements of the photographic subject are detected from the live view image by the object detection unit 34a. This detection of the photographic subject elements employs a per se known photographic subject recognition technique. In the example of Fig. 5, the object detection unit 34a detects the person 61a, the automobile 62a, the bag 63a, the mountains 64a, and the clouds 65a and 66a as photographic subject elements.

Next, the live view image screen is divided by the setting unit 34b into regions that include the photographic subject elements described above. The explanation of this embodiment will suppose that the region that includes the person 61a is defined as being a first region 61, the region that includes the automobile 62a is defined as being a second region 62, the region that includes the bag 63a is defined as being a third region 63, the region that includes the mountains 64a is defined as being a fourth region 64, the region that includes the cloud 65a is defined as being a fifth region 65, and the region that includes the cloud 66a is defined as being a sixth region 66.

### Setting of the Image Capture Conditions for Each Block

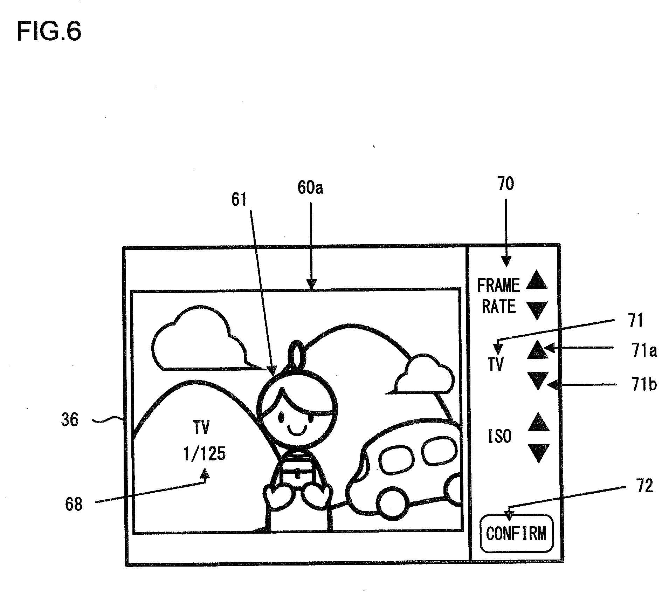

When the screen has been divided into a plurality of regions by the setting unit 34b, the control unit 34 causes the display unit 35 to display a setting screen like the example shown in Fig. 6. Fig. 6 shows display of a live view image 60a, and moreover an image capture conditions setting screen 70 is displayed to the right of the live view image 60a.

On the setting screen 70, as an example of image capture conditions setting items, frame rate, shutter speed (TV), and gain (ISO) are shown listed in that order from the top. The frame rate is the number of frames of the live view image acquired in one second, or the number of frames of a moving video image recorded by the camera 1 in one second. The gain is ISO sensitivity. In addition to the image capture condition setting items shown in the Fig. 6 example, other suitable setting items may be included as appropriate. If all the setting items cannot be fitted into the setting screen 70, then it will be acceptable to arrange for the other setting items to be displayed by scrolling the setting items up and down.

In this embodiment, among the regions that have been divided by the setting unit 34b, the control unit 34 takes a region that has been selected by the user as the subject of setting (or changing) its image capture conditions. For example, in the case of this camera 1 that is capable of being operated by touch actuation, the user may perform tapping actuation on the display surface of the display unit 35, on which the live view image 60a is being displayed, at the position where the image of the main photographic subject, for which he wishes to set (or change) the image capture conditions, is being displayed. If, for example, tapping actuation has been performed by the user on the position where the image of the person 61a is being displayed, then the control unit 34 takes the region 61 in the live view image 60a that includes the person 61a as being the subject region for setting (or for changing) the image capture conditions, and also accentuates the display of the contour of the region 61.

In Fig. 6, the region 61 whose contour is displayed as accentuated (by being displayed with a thick outline, by being displayed as brighter, by being displayed with its color altered, by being displayed as surrounded by a broken line, by being displayed as blinking, or the like) indicates the region that is the subject of setting (or changing) its image capture conditions. In the example of Fig. 6, it will be supposed that the live view image 60a is being displayed with the contour of the region 61 accentuated. In this case, the region 61 is the subject of setting (or of changing) its image capture conditions. For example when, in the case of this camera 1 that is capable of being operated by touch actuation, tapping actuation is performed by the user on the display 71 of shutter speed (TV), then the control unit 34 causes the currently set value of shutter speed for the region that is being displayed as accentuated (i.e. for the region 61) to be displayed within the screen (as shown by a reference symbol 68).

In the following description, the explanation will suppose that the camera 1 is operated by touch actuation, but it would also be acceptable to arrange for setting (or changing) of the image capture conditions to be performed by actuation of one or more buttons included in the actuation members 36 or the like.

When tapping actuation is performed by the user on an upper icon 71a or on a lower icon 71b for shutter speed (TV), the setting unit 34b increases or decreases the displayed value 68 of shutter speed from its currently set value according to this tapping actuation, and also sends a command to the image capturing unit 32 (refer to Fig. 1) so as to cause the image capturing unit 32 to change the image capture conditions for the unit regions 131 (refer to Fig. 3) of the imaging element 32a that correspond to the region that is currently being displayed as accentuated (i.e. for the unit regions of the region 61), according to the above described tapping actuation. A confirm icon 72 is an actuation icon for confirming the image capture conditions that have been set. And, in a similar manner to the case of setting (or changing) the shutter speed (TV), the setting unit 34b also performs setting (or changing) of the frame rate and of the gain (ISO).

Although in the above explanation a case has been described in which the setting unit 34b performs setting of the image capture conditions on the basis of actuation by the user, it should be understood that this feature is not intended to be limitative. It will also be acceptable to arrange for the setting unit 34b not to set the image capture conditions on the basis of actuation by the user, but according to decision by the control unit 34. For example, if blown-out highlights or blocked-up shadows take place in a region of the image that includes a photographic subject element for which the luminance is maximum or minimum, then it will be acceptable to arrange for the setting unit 34b to set the image capture conditions so as to eliminate such blown-out highlights or blocked-up shadows, according to decision by the control unit 34.

For the regions that are not displayed as accentuated (i.e. the regions other than the region 61), the set image capture conditions are maintained without alteration.

Instead of displaying as accentuated the contour of the region that is the subject of setting (or of changing) its image capture conditions, it would also be acceptable to arrange for the control unit 34 to display that entire subject region with its brightness increased, or to display that entire subject region with its contrast increased, or to display that entire subject region as blinking. Moreover, it would also be acceptable to surround the subject region with a frame. Such a frame that is displayed as surrounding the subject region may be a double frame or a single frame, and the display style for such a surrounding frame, such as its line type, its color, its brightness, or the like, may be varied as appropriate. Furthermore, it would also be acceptable to arrange for the control unit 34 to provide, in the neighborhood of the subject region, a display of an arrow sign or the like that indicates that this is the region that is the subject of image capture conditions setting. It would also be acceptable to arrange for the control unit 34 to display the regions other than the subject region that is the subject of image capture conditions setting (or changing) as darkened, or to display such regions other than the subject region with their contrast reduced.

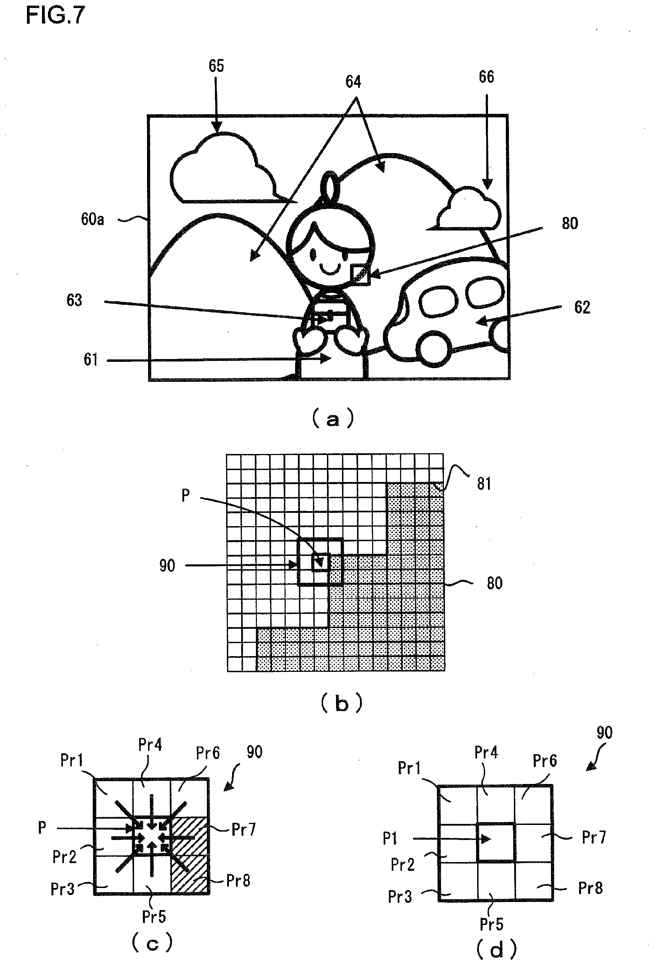

After the image capture conditions for each region have been set as explained above, when the release button not shown in the figures that is included in the actuation members 36 is actuated, or when a display that commands the start of image capturing (such as a shutter release icon) is actuated, according to control of the image capturing unit 32 by the control unit 34, image capture (i.e. main image capturing) is performed under the image capture conditions that were individually set for the above described divided regions respectively. It should be understood that, in the following explanation, it will be supposed that the divided regions are the first region 61 through the sixth region 66 (refer to Fig. 7(a)), and that first image capture conditions through sixth image capture conditions are respectively set for the first region 61 through the sixth region 66. Then, the image processing unit 33 performs image processing on the image data that has been acquired by the image capturing unit 32. This image data is image data to be recorded in the recording unit 37, and hereinafter will be termed the "main image data". It should be understood that the image capturing unit 32 may acquire image data (hereinafter termed "image data for processing") at timing different from the timing of acquisition of the main image data, that is employed when performing image processing on the main image data or when performing detection processing and/or setting processing of various types for capturing the main image data,. It should be understood that the details of such image processing will be explained hereinafter.

### Image Data for Processing

The image data for processing is employed when performing image processing on pixels for attention that are included in a range (hereinafter termed a "boundary portion") within one region (for example, the first region 61) and in the vicinity of a boundary between the one region and another region in the main image data. Moreover, the image data for processing is also employed when performing focus detection processing, photographic subject detection processing, and image capture conditions setting processing. The setting unit 34b of the control unit 34 sets a region in the image capturing element 32a that is broader than the first region 61 as a region (hereinafter termed the "image capture region for processing") for capturing the image data for processing for the first region 61 (hereinafter termed the "first image data for processing"). In this case, for example, the setting unit 34b may set the entire area of the image capturing surface of the imaging element 32a as the image capture region for processing. Furthermore, as image capture conditions for the first image data for processing, the setting unit 34b sets first image capture conditions, which are the image capture conditions for the first region 61. In a similar manner, the setting unit 34b sets the image capture regions for processing for the second image data for processing through the sixth image data for processing to be the entire area of the image capturing surface of the imaging element 32a. And the setting unit 34b sets the image capture conditions for the second region 62 through the sixth region 66 as the image capture conditions for the second image data for processing through the sixth image data for processing, respectively.

It should be understood that the timing for capturing the image data for processing will be described hereinafter.

In the following, explanations will be provided separately for the case in which the image data for processing is employed for image processing, for the case in which the image data for processing is employed for focus detection processing, for the case in which the image data for processing is employed for photographic subject detection processing, and for the case in which the image data for processing is employed for exposure condition setting processing.

### 1. When Employed for Image Processing

The case will now be explained in which the image data for processing is employed for image processing. In the case in which the image processing on the main image data that has been acquired by applying different image capture conditions for each of the divided regions is predetermined image processing, the processing unit 33b of the image processing unit 33 performs image processing on the main image data that is positioned in the boundary portion of the region by employing the image data for processing. Such predetermined image processing is processing for calculating data at a position for attention in the image, that is taken as the processing subject, by referring to data at a plurality of reference positions around the position for attention (subsequently this is termed the "range for attention"), and for example may include pixel defect correction processing, color interpolation processing, contour emphasis processing, noise reduction processing, or the like.

Image processing is performed in order to mitigate strangeness that may appear in the image after image processing, originating due to the fact that the different image capture conditions are set for respective divided regions. Generally, when the position for attention is positioned at a boundary portion of a divided region, at a plurality of the reference positions of the range for attention, both of data to which image capture conditions have been applied that are the same as those of the data at the position for attention, and data to which image capture conditions have been applied that are different from those of the data at the position for attention, may be present. In this embodiment, rather than calculating the data at the position for attention by referring to the data at the reference positions for which different image capture conditions have been applied just as it is without alteration, image processing is performed in the following manner, on the basis of the consideration that it is preferable to calculate the data at the position for attention by referring to data at reference positions for which the same image capture conditions have been applied.

Fig. 7(a) is a figure showing an example of a predetermined range 80 in the live view image 60a that includes a first region 61 and a fourth region 64 with which that first region 61 has a boundary. In this example, it will be supposed that first image capture conditions are set for the first region 61 that includes at least the person, and that fourth image capture conditions are set for the fourth region 64 that includes the mountains. And Fig. 7(b) is a figure showing the predetermined range 80 of Fig. 7(a) in an enlarged view. Image data from pixels on the imaging element 32a corresponding to the first region 61 for which the first image capture conditions are set is shown with a white background, while image data from pixels on the imaging element 32a corresponding to the fourth region 64 for which the fourth image capture conditions are set is shown as shaded. In Fig. 7(b), the image data from a pixel for attention P is positioned in the first region 61, and in the boundary portion in the vicinity of the boundary 81 between the first region 61 and the fourth region 64. Pixels (in this example, eight pixels) around the pixel for attention P and included in a range for attention 90 (in this example, 3 × 3 pixels in size) that is centered upon that pixel for attention P are taken as being reference pixels Pr. Fig. 7(c) is an enlarged view of the pixel for attention P and the eight reference pixels Pr1 through Pr8. The position of the pixel for attention P is the position for attention, and the positions of the reference pixels Pr1 through Pr8 surrounding the pixel for attention P are the reference positions. It should be understood that, in the following explanation, the reference symbol Pr will be employed when referring to the reference pixels generically.

The processing unit 33b of the image processing unit 33 performs image processing by employing the image data of the reference pixels Pr just as it is without alteration. In other words, the processing unit 33b performs image processing and so on such as interpolation or the like by employing all of the data of all of the reference pixels Pr of the pixel for attention P. However, if the first image capture conditions that were applied during image capture of the pixel for attention P and the fourth image capture conditions that were applied during image capture of one or more of the reference pixels Pr around the pixel for attention P are different, then the processing unit 33b operates so as not to employ the image data captured under the fourth image capture conditions in the main image data. In Fig. 7(c), the image data outputted from the pixel for attention P and from the reference pixels Pr1 through Pr6 for which the first image capture conditions were set is shown with a white background, while the image data outputted from the reference pixels Pr7 and Pr8 for which the fourth image capture conditions were set is shown as shaded. In this embodiment, the processing unit 33b operates so as not to employ the image data obtained under the fourth image capture conditions in the image processing, in other words so as not to employ the image data outputted from the reference pixels Pr7 and Pr8 that are shown as shaded. Furthermore, instead of employing the image data for the reference pixels Pr7 and Pr8 of the main image data that was captured under the fourth image capture conditions, the processing unit 33b employs, in the image processing, the image data of the reference pixels Pr7 and Pr8 of the first image data for processing that was generated by setting the first image capture conditions.

Fig. 7(d) shows pixels in the first image data for processing corresponding to the pixel for attention P and to the reference pixels Pr of the main image data shown in Fig. 7(c), in other words image data from pixels whose coordinate values on the image capturing surface of the imaging element 32a are the same. Since the first image data for processing has been captured under the first image capture conditions, accordingly, in Fig. 7(d), the pixel data outputted from the pixel for attention P and from the reference pixels Pr is shown with a white background. Instead of the image data of the reference pixels Pr7 and Pr8 in the main image data, the processing unit 33b selects the image data of the reference pixels Pr7 and Pr8 in the first image data for processing. And the processing unit 33b calculates the image data of the pixel for attention P in the main image data by referring to the image data of the reference pixels Pr1 through Pr6 in the main image data and to the reference pixels Pr7 and Pr8 in the first image data for processing. In other words, the processing unit 33b calculates the image data of the pixel for attention P by employing a set of different image data that were captured under the same image capture conditions.

An example will now be described in which the first image capture conditions and the fourth image capture conditions are different.

### Example #1

A case will now be described by way of example in which only the ISO sensitivity is different between the first image capture conditions and the fourth image capture conditions, and in which the ISO sensitivity under the first image capture conditions is 100 while the ISO sensitivity under the fourth image capture conditions is 800. In the main image data, the pixel for attention P is acquired under the first image capture conditions (with the ISO sensitivity being 100). In this case, the processing unit 33b of the image processing unit 33 performs image processing by, among the reference pixels Pr, employing the image data for the reference pixels Pr1 through Pr6 in the main image data that has been acquired under the first image capture conditions, and the image data for the reference pixels Pr7 and Pr8 (refer to Fig. 7(d)) of the first image data for processing that has been acquired with ISO sensitivity 100. Thus, among the reference pixels Pr acquired under the first image capture conditions, the processing unit 33b does not employ the image data for the reference pixels Pr7 and Pr8 that has been acquired under the fourth image capture conditions (with ISO sensitivity 800).

### Example #2

A case will now be described by way of example in which only the shutter speed is different between the first image capture conditions and the fourth image capture conditions, and in which the shutter speed under the first image capture conditions is 1/1000 second while the shutter speed under the fourth image capture conditions is 1/100 second. In the main image data, the pixel for attention P is acquired under the first image capture conditions (with the shutter speed being 1/1000 second). In this case, the processing unit 33b of the image processing unit 33 performs image processing by, among the reference pixels Pr, employing the image data for the reference pixels Pr1 through Pr6 in the main image data that has been acquired at the shutter speed of 1/1000 second, and the image data for the reference pixels Pr7 and Pr8 of the first image data for processing that has been acquired at the shutter speed of 1/1000 second. Thus, the processing unit 33b does not employ the image data for the reference pixels Pr7 and Pr8 in the main image data that has been acquired under the fourth image capture conditions (shutter speed 1/100 second).

### Example #3

A case will now be described by way of example in which only the frame rate is different between the first image capture conditions and the fourth image capture conditions (with the charge accumulation time being the same in both cases), and in which the frame rate under the first image capture conditions is 30 fps while the frame rate under the fourth image capture conditions is 60 fps. In the main image data, the pixel for attention P is acquired under the first image capture conditions (with the frame rate being 30 fps). In this case, the processing unit 33b of the image processing unit 33 performs image processing by, among the reference pixels Pr, employing the image data for the reference pixels Pr1 through Pr6 in the main image data that has been acquired at a frame rate of 30 fps, and the image data for the reference pixels Pr7 and Pr8 of the first image data for processing that has been acquired at a frame rate of 30 fps. Thus, the processing unit 33b does not employ the image data for the reference pixels Pr7 and Pr8 in the main image data that has been acquired under the fourth image capture conditions (with the frame rate being 60 fps).

On the other hand, if the first image capture conditions that were applied for image capturing the pixel for attention P and the image capture conditions that were applied for all of the reference pixels Pr around the pixel for attention P are the same, then the processing unit 33b of the image processing unit 33 employs the data for the reference pixels Pr that was acquired under the first image capture conditions in the image processing. In other words, the processing unit 33b employs the data for the reference pixels Pr just as it is.

It should be understood that, as described above, even if there are some insubstantial differences in the image capture conditions, then they are considered to be the same image capture conditions.

It should be understood that the processing unit 33b is not limited to being of a type that performs image processing on the image data of the pixel for attention P that has been acquired under the first image capture conditions, by employing the image data for the reference pixels Pr that has been acquired under the first image capture conditions, and the image data for the reference pixels Pr of the first image data for processing that has been acquired under the first image capture conditions. For example, it would also be acceptable for the processing unit 33b to perform image processing on the image data of the pixel for attention P that has been acquired under the first image capture conditions, not by employing the image data of the reference pixels Pr1 through Pr8 of the main image data, but by employing the image data for the reference pixels Pr1 through Pr8 of the first image data for processing. In other words, the processing unit 33b may perform image processing on the image data of the pixel for attention P by employing image data for the reference pixels Pr that has been captured under the same image capture conditions as the image capture conditions that were set for the image capturing of the pixel for attention P.

### Examples of Image Processing

Examples will now be given of image processing in which the image data for processing is employed.

### (1) Image Capturing Pixel Defect Correction Processing

In this embodiment, image capturing pixel defect correction processing is one type of image processing that is performed when image capturing. Generally, with an imaging element 100 that is a solid-state image sensor, sometimes pixel defects may occur during the process of manufacture or after manufacture, so that some data of anomalous levels is outputted. Accordingly, the processing unit 33b of the image processing unit 33 is adapted to perform image processing on image data outputted from image capturing pixels for which pixel defects have occurred so as to ensure that the image data at the positions of the image capturing pixels for which pixel defects have occurred does not stand out conspicuously.

An example of such image capturing pixel defect correction processing will now be explained. The processing unit 33b of the image processing unit 33 may, for example, take a pixel in the main image data that is positioned at a pixel defect that is recorded in advance in a non-volatile memory (not shown in the figures) as being a pixel for attention P (i.e. as a pixel to be the subject of processing), and may take pixels (in this example, eight pixels) around the pixel for attention P that are included in a range for attention 90 (for example 3 × 3 pixels) centered upon this pixel for attention P as being reference pixels Pr.

The processing unit 33b of the image processing unit 33 calculates the maximum value and the minimum value of the image data for the reference pixels Pr, and, when the image data outputted from the pixel for attention P is outside this maximum value or this minimum value, performs so-called Max, Min filter processing to replace the image data outputted from the pixel for attention P with the above described maximum value or minimum value. This type of processing is performed upon the image data from all of the image capturing pixels for which pixel defects have occurred and for which position information is recorded in the non-volatile memory (not shown in the figures).

In this embodiment, if pixels to which image capture conditions have been applied that are different from the image capture conditions that were applied to the pixel for attention P for image capture (i.e., in the example of Fig. 7, the first image capture conditions) are included in the reference pixels Pr described above (Pr7 and Pr8 in Fig. 7), then the processing unit 33b of the image processing unit 33 selects the image data of the first image data for processing of the reference pixels Pr (Pr7 and Pr8 in Fig. 7). And, subsequently, a generation unit 33c of the image processing unit 33 performs the Max, Min filter processing described above by employing the image data of the reference pixels Pr1 through Pr6 of the main image data and the image data of the reference pixels Pr7 and Pr8 of first image data for processing.

### (2) Color Interpolation Processing

In this embodiment, color interpolation processing is another type of image processing that is performed when image capturing. As shown in Fig. 3, in the image capturing chip 111 of the imaging element 32a, green color pixels Gb and Gr, blue color pixels B, and red color pixels R are arranged in a Bayer array. Since there is a lack of image data having the color components that are different from the color component of the color filter F disposed at a corresponding pixel position, accordingly the processing unit 33b of the image processing unit 33 performs color interpolation processing in order to generate image data for the color components that are lacking by referring to the image data for surrounding pixel positions.

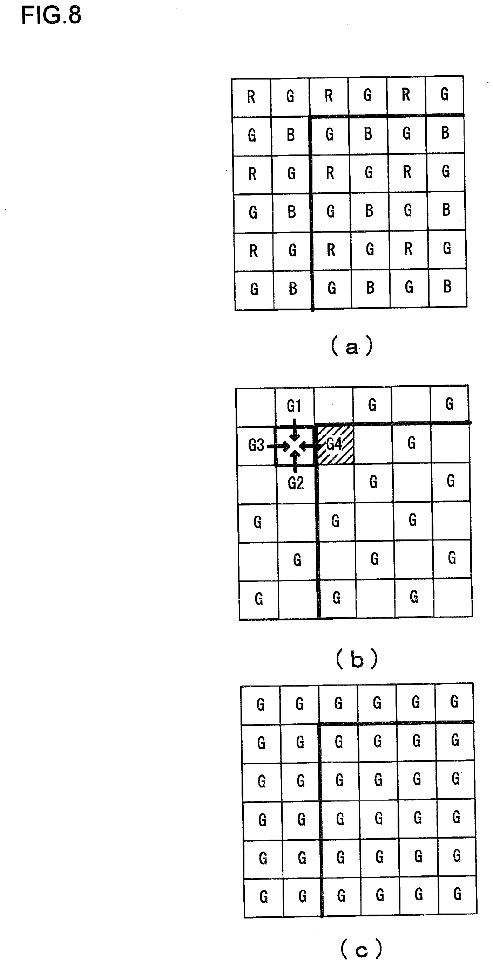

An example of such color interpolation processing will now be explained. Fig. 8(a) is a figure showing an example of the arrangement of image data outputted from the imaging element 32a. Corresponding to each pixel position, this arrangement has color components of each of the colors R, G, and B, according to the Bayer array rule.

### G Color Interpolation

In performing the G color interpolation, the processing unit 33b of the image processing unit 33 takes the position of the R color component and the position of the B color component in order as positions for attention, and generates image data of the G color component at these positions for attention by referring to the four items of G color component image data at reference positions around these positions for attention. When, for example, generating image data of the G color component at the position for attention shown by the thick frame in Fig. 8(b) (at the second row and the second column), the four G color component image data items G1 through G4 positioned in the neighborhood of that position for attention are referred to. For example, the image processing unit 33 (i.e. its generation unit 33c) may take the value (aG1+bG2+cG3+dG4)/4 as being the image data value of the G color component at the position for attention. It should be understood that "a" through "d" here are weighting coefficients that are provided to correspond to the distances between the reference positions and the position for attention, and to the structure of the image.

In Figs. 8(a) to 8(c), as an example, it will be supposed that the first image capture conditions are applied to the region that is leftward of and above the thick line, while image capture conditions that are different from the first image capture conditions are applied to the region that is rightward of and below the thick line. Since image capture conditions that are different from the first image capture conditions that were applied to the position for attention are applied to the reference position corresponding to the image data item G4 of the G color component shown by the shading in Fig. 8(b), accordingly the processing unit 33b of the image processing unit 33 employs the image data of the first image data for processing of the reference pixel Pr for the image data G4. By doing this, the processing unit 33b of the image processing unit 33 calculates the image data of the G color component at the position for attention by employing the image data for the reference pixels G1 through G4 to all of which the first image capture conditions were applied.

By generating image data of the G color component at each of the positions of the B color component and at each of the positions of the R color component in Fig. 8(a) in this manner, the processing unit 33b of the image processing unit 33 is able to obtain image data of the G color component at each of the pixel positions, as shown in Fig. 8(c).

### R Color Interpolation

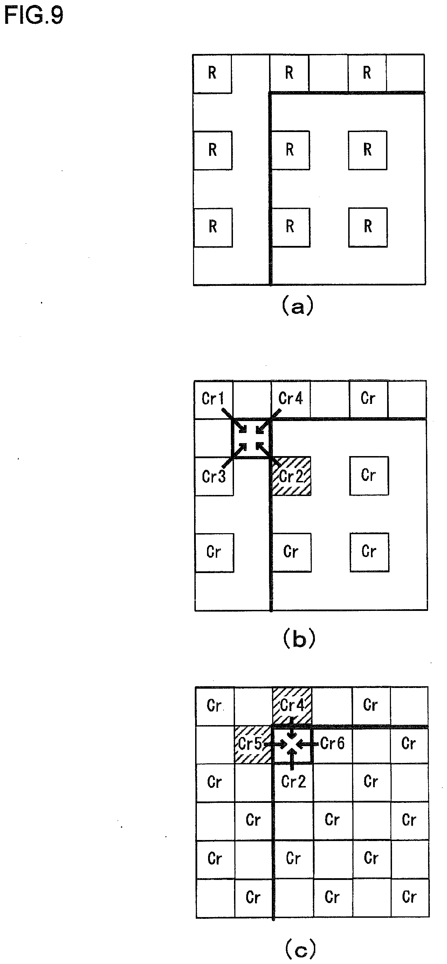

Fig. 9(a) is a figure in which the image data of the R color component has been extracted from Fig. 8(a). The processing unit 33b of the image processing unit 33 calculates the image data of the color difference component Cr shown in Fig. 9(b) on the basis of the image data of the G color component shown in Fig. 8(c) and the image data of the R color component shown in Fig. 9(a).

When, for example, generating image data of the color difference component Cr at the position for attention shown by the thick frame in Fig. 9(b) (at the second row and the second column), the processing unit 33b of the image processing unit 33 refers to the four items of image data Cr1 through Cr4 of the color difference component positioned in the neighborhood of the position for attention. For example, the image processing unit 33 (i.e. its processing unit 33b) may take the value (eCr1+fCr2+gCr3+hCr4)/4 as being the image data for the color difference component Cr at the position for attention. It should be understood that "e" through "h" here are weighting coefficients that are provided to correspond to the distances between the reference positions and the position for attention, and to the structure of the image.

In a similar manner, when, for example, generating image data of the color difference component Cr at the position for attention shown by the thick frame in Fig. 9(c) (at the second row and the third column), the processing unit 33b of the image processing unit 33 refers to the four items of image data Cr2 and Cr4 through Cr6 of the color difference component that are positioned in the neighborhood of the position for attention. For example, the processing unit 33b of the image processing unit 33 may take the value (qCr2+rCr4+sCr5+tCr6)/4 as being the image data for the color difference component Cr at the position for attention. It should be understood that "q" through "t" here are weighting coefficients that are provided to correspond to the distances between the reference positions and the position for attention, and to the structure of the image. In this manner, image data of the color difference component Cr is generated for all the pixels.

In Figs. 9(a) through 9(c), as an example, it is supposed that the first image capture conditions are applied to the region that is leftward of and above the thick line, while image capture conditions that are different from the first image capture conditions are applied to the region that is rightward of and below the thick line. The image capture conditions that are different from the first image capture conditions that are applied to the position for attention (at the second row and the second column) are applied to the reference position corresponding to the image data Cr2 of the color difference component Cr shown in Fig. 9(b) as shaded. The image processing unit 33 (i.e. its processing unit 33b) employs the image data of the reference pixels Pr of the first image data for processing for the image data Cr2. And subsequently the processing unit 33b of the image processing unit 33 calculates the image data of the color difference component Cr at the position for attention.

Furthermore, the first image capture conditions that are different from the image capture conditions that were applied to the position for attention (at the second row and the third column) are applied to the reference positions that correspond to the image data items Cr4 and Cr5 of the color difference component Cr shown in Fig. 9(c) as shaded. The image processing unit 33 (i.e. its processing unit 33b) employs the image data for the reference pixels Pr of the image data for processing for the image data Cr4 and Cr5. And subsequently the processing unit 33b of the image processing unit 33 calculates the image data of the color difference component Cr at the position for attention.

The processing unit 33b of the image processing unit 33 obtains the image data of the color difference component Cr at each pixel position, and then is able to obtain the image data of the R color component at each pixel position by adding the image data of the G color component shown in Fig. 8(c) corresponding to each pixel position.

### B Color Interpolation

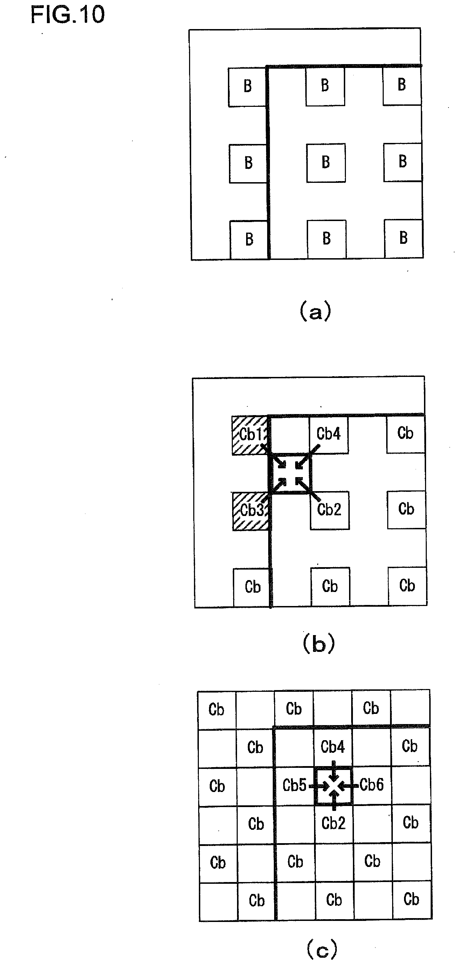

Fig. 10(a) is a figure in which the image data of the B color component has been extracted from Fig. 8(a). The processing unit 33b of the image processing unit 33 calculates the image data of the color difference component Cb shown in Fig. 10(b) on the basis of the image data of the G color component shown in Fig. 8(c) and the image data of the B color component shown in Fig. 10(a).

When, for example, generating image data for the color difference component Cb at the position for attention shown by the thick frame in Fig. 10(b) (at the third row and the third column), the processing unit 33b of the image processing unit 33 refers to the four items of image data Cb1 through Cb4 of the color difference component positioned in the neighborhood of the position for attention. For example, the processing unit 33b of the image processing unit 33 may take the value (uCb1+vCb2+wCb3+xCb4)/4 as being the image data for the color difference component Cb at the position for attention. It should be understood that "u" through "x" here are weighting coefficients that are provided to correspond to the distances between the reference positions and the position for attention, and to the structure of the image.

In a similar manner, when, for example, generating image data for the color difference component Cb at the position for attention shown by the thick frame (at the third row and the fourth column) in Fig. 10(c), the processing unit 33b of the image processing unit 33 refers to the four items of image data Cb2 and Cb4 through Cb6 of the color difference component positioned in the neighborhood of the position for attention. For example, the processing unit 33b of the image processing unit 33 may take the value (yCb2+zCb4+αCb5+βCb6)/4 as being the image data for the color difference component Cb at the position for attention. It should be understood that "y", "z", "α", and "β" here are weighting coefficients that are provided to correspond to the distances between the reference positions and the position for attention, and to the structure of the image. In the manner described above, image data for the color difference component Cb is generated for all the pixels.

In Figs. 10(a) through 10(c), as an example, it is supposed that the first image capture conditions are applied to the region that is leftward of and above the thick line, while image capture conditions that are different from the first image capture conditions are applied to the region that is rightward of and below the thick line. Since the first image capture conditions that are different from the image capture conditions that were applied to the position for attention (at the third row and the third column) are applied to the reference positions corresponding to the image data items Cb1 and Cb3 for the color difference component Cb shown in Fig. 10(b) as shaded, accordingly the processing unit 33b of the image processing unit 33 employs the image data of the reference pixels Pr of the image data for processing for the data Cb1 and Cb3. And subsequently the generation unit 33c of the image processing unit 33 calculates the image data of the color difference component Cb at the position for attention.

When calculating the image data of the color difference component Cb at the position for attention in Fig. 10(c) (at the third row and the fourth column), image capture conditions that are the same as those at the position for attention are applied to the reference positions corresponding to the four image data items Cb2 and Cb4 through Cb6 of the color difference component that are positioned in the neighborhood of the position for attention. The generation unit 33c of the image processing unit 33 then calculates the image data of the color difference component Cb at the position for attention.

Having obtained the image data of the color difference component Cb at each pixel position, the processing unit 33b of the image processing unit 33 is then able to obtain the image data of the B color component at each pixel position by adding the image data of the G color component shown in Fig. 8(c) corresponding to each pixel position.

### (3) Contour Emphasis Processing

An example of contour emphasis processing will now be explained. In the image for one frame, the processing unit 33b of the image processing unit 33 may, for example, perform a per se known linear filter calculation by employing a kernel of a predetermined size that is centered on the pixel for attention P (i.e. on the pixel that is the subject of processing). If the size of the kernel of the sharpening filter, which is an example of a linear filter, is N × N pixels, the position of the pixel for attention P is the position for attention, and the positions of the (N²-1) reference pixels surrounding the pixel for attention P are the reference positions.

It should be understood that it would also acceptable for the size of the kernel to be N × M pixels.

The processing unit 33b of the image processing unit 33 performs filter processing to replace the data at the pixel for attention P with the result of the linear filter calculation, while shifting the pixel for attention from left to right along successive horizontal lines, for example from the horizontal line at the upper portion of the frame image toward the horizontal line at the lower portion thereof.

In this embodiment, if one or more pixels to which image capture conditions have been applied that are different from the first image capture conditions that were applied to the pixel for attention P are included in the reference pixels Pr described above, then the processing unit 33b of the image processing unit 33 employs the image data of the reference pixels Pr in the first image data for processing for the pixels to which the image capture conditions that are different from the first image capture conditions have been applied. And subsequently the generation unit 33c of the image processing unit 33 performs the linear filter processing described above.

### (4) Noise Reduction Processing

An example of noise reduction processing will now be explained. In the image for one frame, the processing unit 33b of the image processing unit 33 may, for example, perform a per se known linear filter calculation by employing a kernel of a predetermined size that is centered on the pixel for attention P (i.e. on the pixel that is the subject of processing). If the size of the kernel of the smoothing filter, which is an example of a linear filter, is N × N pixels, the position of the pixel for attention P is the position for attention, and the positions of the (N²-1) reference pixels surrounding the pixel for attention P are the reference positions.

It should be understood that it would also acceptable for the size of the kernel to be N × M pixels.

The processing unit 33b of the image processing unit 33 performs filter processing to replace the data at the pixel for attention P with the result of linear filter calculation, while shifting the pixel for attention from left to right along successive horizontal lines, for example from the horizontal line at the upper portion of the frame image toward the horizontal line at the lower portion thereof.

In this embodiment, if one or more pixels to which image capture conditions have been applied that are different from the first image capture conditions that were applied to the pixel for attention P for image capture are included in the reference pixels Pr described above, then the processing unit 33b of the image processing unit 33 employs the image data of the reference pixels Pr in the first image data for processing for the pixels to which image capture conditions that are different from the first image capture conditions have been applied. And subsequently the processing unit 33b of the image processing unit 33 performs the linear filter processing described above.

It should be understood that while, in the above description, it has been explained that the setting unit 34b sets the entire area of the image capturing surface of the imaging element 32a as being the image capture region for processing, this embodiment is not to be considered as being limitative. It would also be acceptable for the setting unit 34b to set a partial region of the image capturing surface of the imaging element 32a as being the image capture region for processing. For example, the setting unit 34b may set a region of the main image data that corresponds to the first region 61 as being the image capture region for processing, and may apply the first image capture conditions to that region. In this case, as the image capture region for processing, the setting unit 34b sets the first region 61 and an exterior region outside the external periphery of this first region 61, for example a region that is widened outward therefrom by approximately a predetermined number of pixels. With respect to the region outside the image capture region for processing that corresponds to the first region 61, the processing unit 33b subdivides it into regions on the image capturing surface of the imaging element 32a corresponding to each of the second region 62 through the sixth region 66, and applies the second image capture conditions through the sixth image capture conditions respectively thereto. To put it in another manner, the setting unit 34b applies the first setting conditions to the image capture region for processing on the image capturing surface that includes the region for which the first image capture conditions were set and also regions for which other image capture conditions were set, and applies image capture conditions that are different from the first image capture conditions to the regions other than the image capture region for processing.

It should be understood that, for each of the second through the sixth image data for processing as well, in a similar manner, the setting unit 34b causes the imaging unit 32 to perform image capture by employing an image capture region for processing that is set to be broader than each of the second region 62 through the sixth region 66.

Alternatively, as the image data for processing, it would also be acceptable for the setting unit 34b to extract, from image data that has been captured by setting the entire area of the image capturing surface of the imaging element 32a as the image capture region for processing, image data related to each region that has been set in the main image data and also image data related to regions exterior to those regions described above. For example, from the image data that has been captured by setting the first image capture conditions and by employing the entire area of the image capturing surface of the imaging element 32a, the setting unit 34b may generate, as first processing image data, image data that has been extracted from the first region 61 of the main image data and from a region external to that first region 61. For the second image data for processing through the sixth image data for processing as well, the setting unit 34b may also, from the image data that has been captured by employing the entire area of the image capturing surface to which the second image capture conditions through the sixth image capture conditions have respectively been applied, extract image data from the regions that respectively correspond to the second region 62 through the sixth region 66, and may take this as being the image data for processing.

Furthermore, the setting unit 34b is not limited to being of a type that sets the image capture region for processing to correspond to the regions set in the main image data. It would also be acceptable for the image capture region for processing to be set in advance to a partial region on the image capturing surface of the imaging element 32a. For example, if the image capture region for processing is set to a portion of the image capturing surface of the imaging element 32a in the vicinity of its center, then it is possible, when capturing an image of a person who is positioned at the center of the screen (such as taking a portrait), to generate image data for processing corresponding to a region in which the main photographic subject is likely to be included. In this case, it would be acceptable to enable the size of the image capture region for processing to be changed on the basis of user actuation; or, alternatively, it would also be acceptable for this size to be set in advance and fixed.

### 2. When Performing Focus Detection Processing

Now, a case will be explained in which the image data for processing is employed for focus detection processing. The setting unit 34b performs focus detection processing by employing image data for processing that has been captured with the same image capture conditions set for the entire area of the image capturing surface of the imaging element 32a. This is because, if the point for focusing of AF operation, in other words the focus detection area, were to be subdivided into a first region and a second region for which the image capture conditions were different, then might there be a possibility that the accuracy of focus detection processing by the AF calculation unit 34d would decrease. For example, in some cases image data for which different image capture conditions have been applied may be present in the image data for focus detection, based upon which the amount of image deviation (i.e. the phase difference) in the image is detected. In this embodiment, rather than performing detection of the amount of image deviation (i.e. of the phase difference) by employing image data for which different image capture conditions have been applied just as it is, focus detection processing is performed by employing the image data for processing, on the basis of the consideration that it is more desirable to perform detection of the amount of image deviation (i.e. of the phase difference) by employing image data for which there is no disparity between different regions of image data caused by the different image capture conditions.

### Example of Focus Detection Processing

In the AF operation according to this embodiment, for example, the focus is adjusted to a photographic subject that corresponds to a focusing point that is selected by the user from among a plurality of candidate focusing points on the image capturing screen. The AF calculation unit 34d of the control unit 34 calculates the amount of defocusing of the image capturing optical system 31 by detecting the amount of image deviation (i.e. the phase difference) of a plurality of images of the photographic subject formed by light fluxes having passed through different pupil regions of the image capturing optical system 31. And the AF calculation unit 34d of the control unit 34 shifts a focusing lens of the image capturing optical system 31 to a position that brings the amount of defocusing to zero (or to less than some acceptable value), in other words to its focusing position.

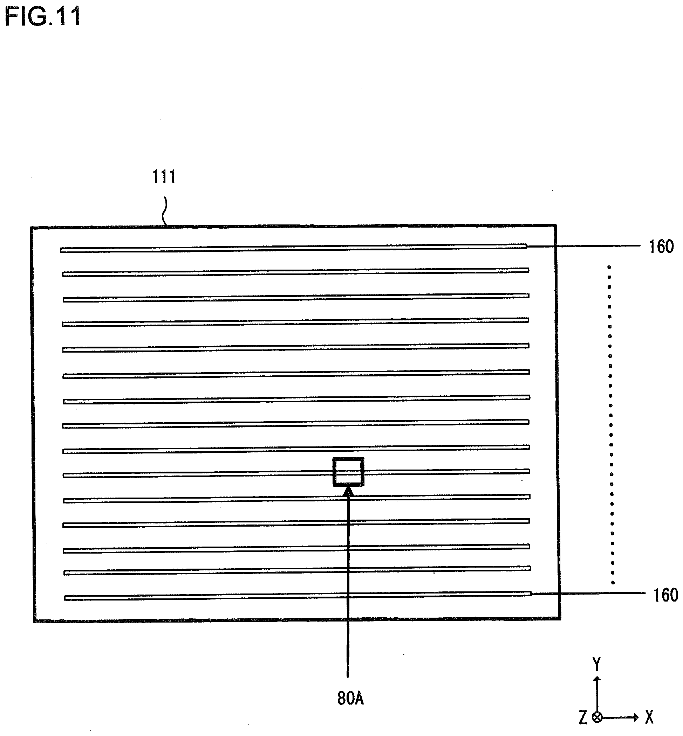

Fig. 11 is a figure showing an example of positioning of pixels for focus detection in the image capturing surface of the imaging element 32a. In this embodiment, pixels for focus detection are provided as lined up separately along the X axis direction (i.e. the horizontal direction) of the image capturing chip 111. In the example of Fig. 11, fifteen focus detection pixel lines 160 are provided, spaced apart at predetermined intervals. Each of the pixels for focus detection that make up the focus detection pixel lines 160 outputs a photoelectrically converted signal for focus detection. Normal pixels for image capturing are provided in the image capturing chip 111 at positions other than those of the focus detection pixel lines 160. These pixels for image capturing output photoelectrically converted signals for provision of the live view image, and for recording.

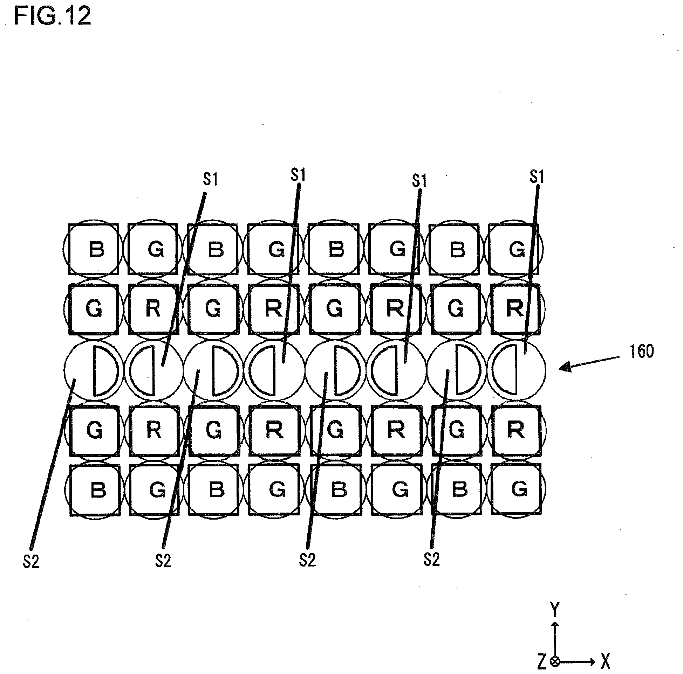

Fig. 12 is a figure giving an enlarged view of a partial region of one of the focus detection pixel lines 160 described above, corresponding to a point for focusing 80A shown in Fig. 11. In Fig. 12, examples are shown of red color pixels R, green color pixels G (Gb and Gr), blue color pixels B, pixels for focus detection S1, and other pixels for focus detection S2. The red color pixels R, the green color pixels G (Gb and Gr), and the blue color pixels B are arranged according to the rule for arrangement in a Bayer array described above.

The square shaped regions shown by way of example for the red color pixels R, the green color pixels G (Gb and Gr), and the blue color pixels B represent the light receiving areas of the pixels for image capturing. Each of the pixels for image capturing receives the light flux that has passed through an exit pupil of the image capturing optical system 31 (refer to Fig. 1). In other words, each of the red color pixels R, the green color pixels G (Gb and Gr), and the blue color pixels B has a square shaped mask opening portion, and light passing through these mask opening portions reaches the light reception portions of these pixels for image capturing.

It should be understood that the shapes of the light receiving areas (i.e. of the mask openings) of the red color pixels R, the green color pixels G (Gb and Gr), and the blue color pixels B are not limited to being quadrilateral; for example, they could be circular.

The semicircular shaped regions shown by way of example for the pixels for focus detection S1 and the pixels for focus detection S2 represent the light receiving areas of these pixels for focus detection. In other words, each of the pixels for focus detection S1 has a semicircular shaped mask opening portion on the left side of its pixel position in Fig. 12, and light passing through this mask opening portion reaches the light reception portion of this pixel for focus detection S1. On the other hand, each of the pixels for focus detection S2 has a semicircular shaped mask opening portion on the right side of its pixel position in Fig. 12, and light passing through this mask opening portion reaches the light reception portion of this pixel for focus detection S2. In this manner, each of the pixel for focus detection S1 and the pixel for focus detection S2 receives one of a pair of ray bundles that have passed through different regions of the exit pupil of the imaging optical system 31 (refer to Fig. 1).

It should be understood that the positions of the focus detection pixel lines 160 in the image capturing chip 111 are not limited to being the positions shown by way of example in Fig. 11. Moreover, the number of the focus detection pixel lines 160 is not limited to the number shown by way of example in Fig. 11. Furthermore, the shapes of the mask opening portions in the pixels for focus detection S1 and the pixels for focus detection S2 are not limited to being semicircular; for example, it would be acceptable to arrange to divide the quadrilateral light reception regions (i.e. the mask opening portions) of the image capturing pixels R, the image capturing pixels G, and the image capturing pixels B in the horizontal direction, so as to define rectangular shapes.

Yet further, in the image capturing chip 111, it would also be acceptable for the focus detection pixel lines 160 to be provided with pixels for focus detection that are lined up one by one along the Y axis direction (i.e. the vertical direction) of the image capturing chip 111. An imaging element of the type shown in Fig. 12 in which pixels for image capturing and pixels for focus detection are arranged in a two dimensional array is per se known, and accordingly the details of these pixels are not shown in the figures, and explanation thereof will be curtailed.

It should be understood that, in the Fig. 12 example, a so-called 1PD configuration has been explained in which each of the pixels S1 and S2 for focus detection receives one of a pair of light fluxes for focus detection. Instead of this, it would also be acceptable to arrange to provide a so-called 2PD configuration in which each of the pixels for focus detection receives both of a pair of light fluxes for focus detection. By adopting the 2PD configuration, it becomes possible to employ the photoelectrically converted signals obtained from the pixels for focus detection for recording the photoelectrically converted signals.

On the basis of the photoelectrically converted signals for focus detection outputted from the pixels for focus detection S1 and from the pixels for focus detection S2, the AF calculation unit 34d of the control unit 34 detects the amount of image deviation (i.e. the phase difference) between the pair of images by the pair of light fluxes that have passed through different regions of the image capturing optical system 31 (refer to Fig. 1). And the amount of defocusing is calculated on the basis of this amount of image deviation (i.e. on the basis of this phase difference). Since calculation of the amount of defocusing according to this type of split pupil phase method is per se known in the camera field, accordingly detailed description thereof will be omitted.

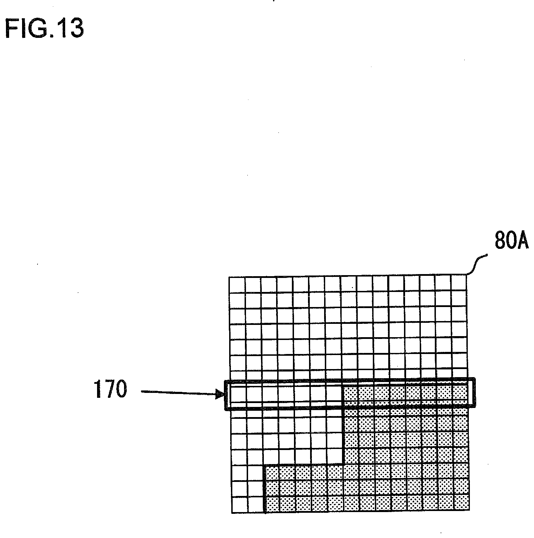

It will be supposed that, in the live view image 60a shown by way of example in Fig. 7(a), the point for focusing 80A (refer to Fig. 11) is selected by the user to a position of the first region 61 that corresponds to the predetermined range 80. Fig. 13 is an enlarged view showing the point for focusing 80A. The pixels with white background indicate that the first image capture conditions are set, while the shaded pixels indicate that the fourth image capture conditions are set. In Fig. 13, the position surrounded by the frame 170 corresponds to one of the focus detection pixel lines 160 (refer to Fig. 11).

Normally, the AF calculation unit 34d of the control unit 34 performs focus detection processing by employing the image data from the pixels for focus detection shown in the frame 170 just as it is without alteration. However, if image data to which the first image capture conditions have been applied and image data to which the fourth image capture conditions have been applied are mixed together in the image data that is surrounded by the frame 170, then the AF calculation unit 34d of the control unit 34 performs focus detection processing by employing the first image data for processing to which the first image capture conditions have been applied. In this case, among the first image data for processing, the AF calculation unit 34d of the control unit 34 employs image data corresponding to the range surrounded by the frame 170.

Examples will now be described of cases in which the first image capture conditions and the fourth image capture conditions are different.

### Example #1

As one example, a case will now be described in which the only difference between the first image capture conditions and the fourth image capture conditions is the ISO sensitivity, with the ISO sensitivity in the first image capture conditions being 100 while the ISO sensitivity in the fourth image capture conditions being 800. Thus, one portion of the image data surrounded by the frame 170 is acquired under the first image capture conditions (with the ISO sensitivity being 100), while the remainder is acquired under the fourth image capture conditions (with the ISO sensitivity being 800). In this case, the AF calculation unit 34d of the control unit 34 performs focus detection processing by employing image data corresponding to the range surrounded by the frame 170 among the first image data for processing to which the first image capture conditions have been applied.

### Example #2

As another example, a case will now be described in which the only difference between the first image capture conditions and the fourth image capture conditions is the shutter speed, with the shutter speed in the first image capture conditions being 1/1000 second while the shutter speed in the fourth image capture conditions being 1/100 second. Thus, a portion of the image data surrounded by the frame 170 is acquired under the first image capture conditions (with the shutter speed being 1/1000 second), while the remainder is acquired under the fourth image capture conditions (with shutter speed 1/100 second). In this case, the AF calculation unit 34d of the control unit 34 performs focus detection processing by employing image data corresponding to the range surrounded by the frame 170 among the first image data for processing to which the first image capture conditions have been applied (with the shutter speed being 1/1000 second).

### Example #3

As yet another example, a case will now be described in which the only difference between the first image capture conditions and the fourth image capture conditions is the frame rate (with the charge accumulation time being the same), with the frame rate in the first image capture conditions being 30 fps while the frame rate in the fourth image capture conditions is 60 fps. Thus, a portion of the image data surrounded by the frame 170 is acquired under the first image capture conditions (with the frame rate being 30 fps), while the remainder is acquired under the fourth image capture conditions (with the frame rate being 60 fps). In this case, the AF calculation unit 34d of the control unit 34 performs focus detection processing by employing image data, among the first image data for processing, corresponding to the range surrounded by the frame 170 to which the first image capture conditions (with the frame rate being 30 fps) have been applied.

On the other hand, if the image capture conditions that were applied to the image data surrounded by the frame 170 are all the same, then it will be acceptable for the AF calculation unit 34d of the control unit 34 not to employ the image data for processing at all. In other words, the AF calculation unit 34d of the control unit 34 performs focus detection processing by employing the image data from the pixels for focus detection shown by the frame 170 just as it is without alteration.

It should be understood that, as described above, even if there are some insubstantial differences in the image capture conditions, they are nevertheless considered to be the same image capture conditions.

In the above explanation, as an example, focus detection processing that employs the split pupil phase method has been disclosed, but it would also be acceptable to perform focus detection processing in a similar manner in the case of employing a contrast detection method in which a focusing lens of the image capturing optical system 31 is shifted to its focusing position on the basis of the magnitude of the contrast of the photographic subject image.

In the case of employing such a contrast detection method, while shifting the focusing lens of the image capturing optical system 31, the control unit 34 performs per se known calculation of a focus evaluation value at each position of the focusing lens on the basis of the output data outputted from the pixels for image capturing of the imaging element 32a corresponding to the point for focusing. And then the position of the focusing lens that makes the focus evaluation value attain its maximum is taken as being its focusing position.

Normally, the control unit 34 performs calculation of the focus evaluation value by employing the image data outputted from the image capturing pixels corresponding to the point for focusing just as it is without alteration. However, if image data to which the first image capture conditions have been applied and image data to which image capture conditions have been applied that are different from the first image capture conditions are mixed together in the image data corresponding to the point for focusing, then the control unit 34 calculates the focus evaluation value by employing the first image data for processing to which the first image capture conditions have been applied.

It should be understood that, in the above explanation, it has been described that the setting unit 34b sets the entire area of the image capturing surface of the imaging element 32a as the image capture region for processing, but this embodiment is not to be considered as being limited to this example. It would also be acceptable for the setting unit 34b to set a partial region of the image capturing surface of the imaging element 32a as the image capture region for processing. For example, as the image capture region for processing, the setting unit 34b may set a range that includes the frame 170, or a region corresponding to a range that includes the point for focusing, or the neighborhood of the central portion of the image capturing surface of the imaging element 32a.

Alternatively, it would also be acceptable for the setting unit 34b to establish the image data for processing by extracting, from the image data that has been captured by setting the entire area of the image capturing surface of the imaging element 32a as the image capture region for processing, a range that includes the frame 170, or a region that corresponds to a range that includes the point for focusing.

### 3. When Performing Photographic Subject Detection Processing

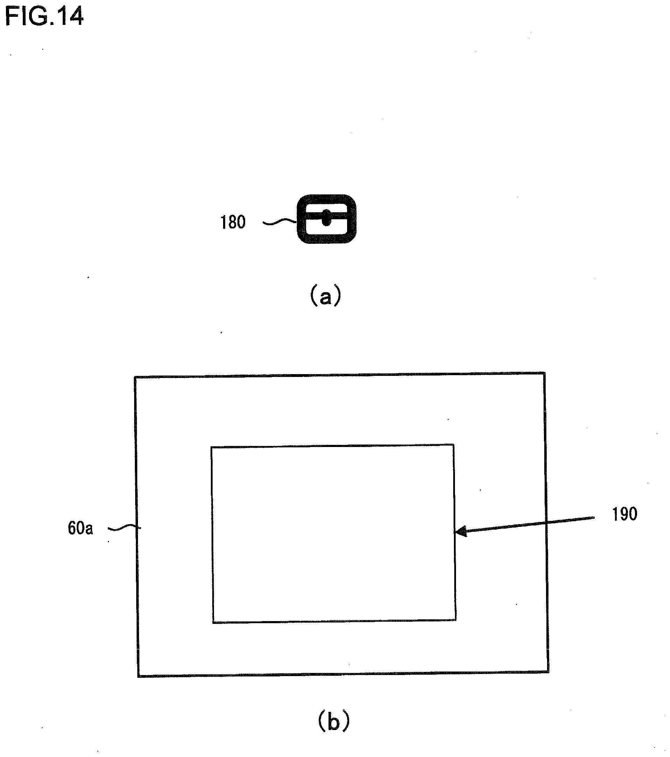

Fig. 14(a) is a figure showing an example of a template image representing an object that is to be detected, and Fig. 14(b) is a figure showing examples of a live view image 60(a) and a search range 190. The object detection unit 34a of the control unit 34 detects the photographic subject from the live view image (in this example, it detects the bag 63a, which is one of the photographic subject elements of Fig. 5). It will be acceptable to arrange for the object detection unit 34a of the control unit 34 to take the range for subject detection as being the entire range of the live view image 60a, but, in order to reduce the burden of the detection processing, it would also be acceptable to take only a portion of the live view image 60a as being the search range 190.

In the case in which the search range 190 is divided up into a plurality of regions for which the image capture conditions are different from one another, the object detection unit 34a of the control unit 34 performs the photographic subject detection processing by employing image data for processing that has been captured by setting the same image capture conditions over the entire area of the imaging element 32a.

In general, if the search range 190 that is employed for detection of the elements of the photographic subject includes a boundary between two regions, then it may happen that captured data for which different image capture conditions have been applied may be mixed together in the image data for the search range 190. In this embodiment, rather than performing detection of the elements of the photographic subject by employing image data to which different image capture conditions have been applied just as it is without alteration, the photographic subject detection processing is performed by employing the image data for processing, on the basis of the consideration that it is more desirable to perform detection of the photographic subject elements by employing image data for which there is no variance in the image data caused by the different image capture conditions within the search range 190.

In the case of the live view image 60a shown by way of example in Fig. 5, the case will now be explained of detecting the bag 63a, which is an object that is being held by the person 61a. The object detection unit 34a of the control unit 34 sets the search range 190 to the neighborhood of a region that includes the person 61a. It should be understood that it would also be acceptable to set the first region 61 that includes the person 61a as the search range. Moreover it should be understood that, as described above, the third image capture conditions are set for the third region 63.

In the case in which the search range 190 is not subdivided into two regions for which the image capture conditions are different from one another, the object detection unit 34a of the control unit 34 performs the photographic subject detection processing by employing the image data representing the search range 190 just as it is without alteration. However, supposing the case that image data for which the first image capture conditions have been applied and image data for which the third image capture conditions have been applied are mixed together in the image data for the search range 190, then the object detection unit 34a of the control unit 34 employs the image data for processing. In this case, the photographic subject detection unit 34a of the control unit 34 performs the photographic subject detection processing by employing third image data for processing that has been captured under the third image capture conditions applied to the third region 63 corresponding to the bag 63a. It should be understood that it is supposed that the image capture conditions that are set are the same as in the case of the above described Examples #1 through #3 for the case of performing focus detection processing.

It will also be acceptable to apply the image data for the search range 190 described above to a search range that is employed in order to detect a specific photographic subject, such as the face of a person or the like, or to a region that is employed for determining the type of scene that has been captured.

Furthermore, the above described technique is not limited to a search range employed in a pattern matching method that employs a template image on the image data of the search range 190 described above, but may also be applied, in a similar manner, to a search range for detection of the amount of some characteristic of the image on the basis of its color or its contour or the like.

Yet further, it would also be acceptable to apply to processing for tracking of a moving object in which a region that is similar to a tracking subject in the frame image that is previously acquired is found from frame images that are subsequently acquired, by performing per se known template matching processing employing image data for a plurality of frames whose time points of acquisition are different as in the case of a live view image. In this case, if image capture conditions that are mutually different have been applied in the search range set for the frame image that is subsequently acquired, then the control unit 34 performs the tracking processing using image data corresponding to the search range in the image data for processing.

Even further, the same also applies in a known method for detecting a movement vector by employing image data for a plurality of frames whose time points of acquisition are different. If image capture conditions that are mutually different have been applied for the detection regions in the image data, that are employed for detection of the movement vector, then the control unit 34 detects the movement vector by employing the image data corresponding to the detection regions that are employed for detection of the movement vector in the image data for processing.

It should be understood that while, in the explanation given above, it has been described that the setting unit 34b sets the entire area of the image capturing surface of the imaging element 32a as the image capture region for processing, the present embodiment is not to be considered as being limited by this feature. It would also be acceptable for the setting unit 34b to set a partial region of the image capturing surface of the imaging element 32a as the image capture region for processing. For example, as the image capture region for processing, the setting unit 34b may set a range that includes the search range 190, or a region corresponding to a range that includes a detection range employed for detection of a movement vector, or the neighborhood of the central portion of the image capturing surface of the imaging element 32a.

Alternatively, it would also be acceptable for the setting unit 34b to generate image data for processing by setting the entire area of the image capturing surface of the imaging element 32a as the image capture region for processing, and extracting, from the image data that has been captured, a range that includes the search range 190, or a range that includes a detection range employed for detection of a movement vector.

### 4. When Setting Image Capture Conditions

In the state in which the image capturing screen is divided into regions and different image capture conditions are set for the different divided regions, the setting unit 34b of the control unit 34 performs photometry again and determines the exposure conditions anew by employing the image data for processing for the image data positioned in the neighborhood of the boundary between the regions. For example, in the case in which a boundary between the divided regions is included in the photometric range that is set for the central portion of the image capturing screen, it may happen that image data to which mutually different image capture conditions have been applied are mixed together in the image data for the photometric range. In the present embodiment, rather than performing the exposure calculation processing by employing the image data to which the different image capture conditions have been applied just as it is without alteration, the exposure calculation processing is performed by employing the image data for processing, on the basis of the consideration that it is more desirable to perform the exposure calculation processing by employing image data for which there is no disparity in the image data caused by the different image capture conditions.

If the photometric range is not subdivided into a plurality of regions for which the image capture conditions are mutually different, then the setting unit 34b of the control unit 34 performs the exposure calculation processing by employing the image data that constitutes the photometric range just as it is without alteration. However, supposing that image data to which the first image capture conditions have been applied and image data to which the fourth image capture conditions have been applied are mixed together in the image data for the photometric range (for example, in a region that includes the boundary portion 80 of Fig. 7), then the setting unit 34b of the control unit 34 employs the image data for processing. In this case, the setting unit 34b of the control unit 34 performs the exposure calculation processing by employing the first image data for processing that has been captured under the first image capture conditions that were applied to the first region 61. It should be understood that the image capture conditions that are set are the same as in the case of the focus detection processing (refer to Example #1 through Example #3 described above).

The technique described above is not limited to the photometric range for performing the above described exposure calculation processing, but also is similarly applicable to the range for photometry (colorimetry) that is performed when determining a white balance adjustment value, and/or for the range for photometry that is performed when determining whether or not to emit auxiliary photographic illumination from a light source that emits auxiliary photographic light, and/or for the range for photometry that is performed when determining the amount of auxiliary photographic illumination to be emitted by the abovementioned auxiliary photographic light source.

Furthermore, in a case in which the resolutions at which the image signals are read out are to be made different between the different regions into which the image capturing screen is divided, the similar technique may be applied to regions that are employed for determining the type of image capturing scene which are used to determine the resolution at which each region is read out.

It should be understood that, in the explanation described above, a case has been explained in which the setting unit 34b sets the entire area of the image capturing surface of the imaging element 32a as the image capture region for processing; but the present embodiment is not to be considered as being limited by this feature. It would also be acceptable for the setting unit 34b to set a partial region of the image capturing surface of the imaging element 32a as the image capture region for processing. For example, as the image capture region for processing, the setting unit 34b may set a region corresponding to a range that includes the photometric range, or the neighborhood of the central portion of the image capturing surface of the imaging element 32a.

Alternatively, it would also be acceptable for the setting unit 34b to generate the image data for processing by setting the entire area of the image capturing surface of the imaging element 32a as the image capture region for processing, and then extracting a range that includes the photometric range from the image data that has been captured.

The timing for generating the image data for processing employed in the various types of processing described above will now be explained. In the following, the timing of generation of the image data for processing employed in the image processing, and the timing of generating the image data for processing employed in the focus detection processing, in the photographic subject detection processing, and in the exposure condition setting processing (hereinafter collectively termed the detection and setting processing) will be explained separately.

### Generation of Image Data for Processing Employed in Image Processing

The image capturing control unit 34c causes the image capturing unit 32 to capture the image data for processing at a timing that is different from the timing at which the main image data is captured. In this embodiment, the image capturing control unit 34c causes the image capturing unit 32 to capture the image data for processing during display of the live view image, or when one of the actuation members 36 is actuated. Furthermore, the image capturing control unit 34c outputs information about the image capture conditions set for the image data for processing by the setting unit 34b when commanding image capture of the image data for processing. In the following, the explanation will be divided into an explanation of capture of the image data for processing during display of the live view image, and an explanation of capture of the image data for processing when the actuation member 36 is actuated.

### (1) During Display of Live View Image

After an actuation that commands starting of the display of the live view image is performed by the user, the image capturing control unit 34c causes the image capturing unit 32 to perform capture of the image data for processing. In this case, the image capturing control unit 34c causes the image capturing unit 32 to capture the image data for processing on a predetermined cycle during the display of the live view image. For example, the image capturing control unit 34c may output to the image capturing unit 32 a signal that commands capture of the image data for processing instead of a command to capture the live view image, at a timing related to the frame rate of the live view image, for example at the timing that even numbered frames are captured, or at the timing after ten frames of the live view image are captured.

At this time, the image capturing control unit 34c causes the image capturing unit 32 to capture the image data for processing under image capture conditions that are set by the setting unit 34b.

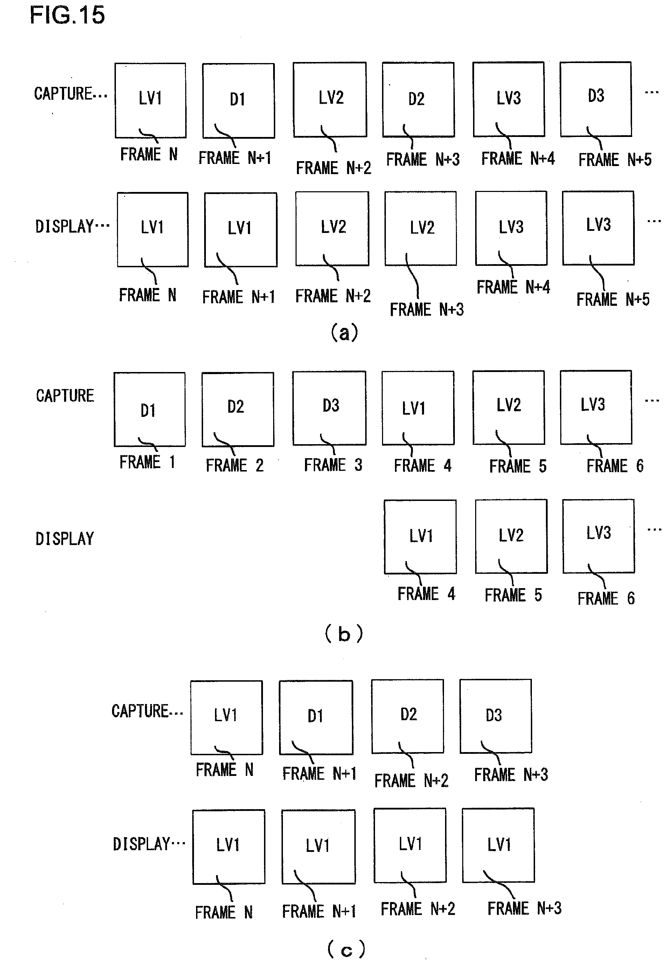

Referring to Fig. 15, examples will now be given of the relationship between the timing of capture of image data for the live view image and the timing of capture of the image data for processing. Fig. 15(a) shows a case in which capture of an image for the live view image and capture of an image for the image data for processing are performed alternatingly, one frame each at a time. It will be supposed that, due to user actuation, the first image capture conditions through the third image capture conditions have been set for the first region 61 through the third region 63 (refer to Fig. 7(a)). At this time, first image data for processing D1 for which the first image capture conditions are set, second image data for processing D2 for which the second image capture conditions are set, and third image data for processing D3 for which the third image capture conditions are set are captured, in order to employ them in the processing of, respectively, the first region 61 through the third region 63 of the main image data.

The image capturing control unit 34c commands the image capturing unit 32 to capture a live view image LV1 at the N-th frame, and the control unit 34 causes the display unit 35 to display the live view image LV1 that has been obtained by this image capture. At the timing for image capturing the (N+1)-th frame, the image capturing control unit 34c commands the image capturing unit 32 to capture the first image data for processing D1 for which the first image capture conditions have been applied. The image capturing control unit 34c then records this first image data for processing D1 that has thus been captured upon a predetermined recording medium (not shown in the figures). In this case, the control unit 34 causes the display unit 35 to display, as the live view image for the (N+1)-th frame, the live view image LV1 that was captured at the timing that the N-th frame was captured. In other words, the display of the live view image LV1 of the previous frame is continued.

At the timing for capture of the live view image LV2 at the (N+2)-th frame, the image capturing control unit 34c commands the image capturing unit 32 to capture the live view image LV2 of the (N+2)-th frame. And the control unit 34 changes over the display on the display unit 35 from the display of the live view image LV1 to a display of the live view image LV2 that has been obtained by image capture of the (N+2)-th frame. Then, at the timing for capture of the (N+3)-th frame, the image capturing control unit 34c causes the image capturing unit 32 to capture the second image data for processing D2 to which the second image capture conditions have been applied, and records the second image data for processing D2 that has thus been captured. Also, in this case, as the live view image of the (N+3)-th frame, the control unit 34 causes the display of the live view image LV2 that has been captured at the timing of capture of the (N+2)-th frame to be continued on the display unit 35.

For the (N+4)-th frame, in a similar manner to the case for the N-th frame and for the (N+2)-th frame, the image capturing control unit 34c causes the image capturing unit 32 to capture the live view image LV3, and the control unit 34 causes the display unit 35 to display the live view image LV3 that has thus been captured. And, for the (N+5)-th frame, the image capturing control unit 34c causes the image capturing unit 32 to capture the third image data for processing D3 to which the third image capture conditions have been applied. At this time, in a similar manner, the control unit 34 causes the display of the live view image LV3 in the (N+4)-th frame to be continued on the display unit 35. And, for subsequent frames, the control unit 34 causes the processing for the N-th frame through the (N+5)-th frame to be repeatedly performed.

It should be understood that, if the setting unit 34b changes the image capture conditions on the basis of the result of detection by the object detection unit 34a or on the basis of the result of calculation by the AF calculation unit 34d, then the image capturing control unit 34c causes the newly set image capture conditions to be applied at the timings for capture of the image data for processing (the (N+1)-th, (N+3)-th, and (N+5)-th frames in Fig. 15(a)), and causes the image capturing unit 32 to perform capture.

Moreover, it should be understood that it will also be acceptable for the image capturing control unit 34c to cause the image capturing unit 32 to capture the image data for processing before starting the display of the live view image. For example, when the power supply of the camera 1 is turned on by the user, or when an actuation is performed to issue a command for starting the display of the live view image, then a signal is outputted to command the image capturing unit 32 to capture the image data for processing. And, when the capture of the first image data for processing through the third image data for processing has been completed, then the image capturing control unit 34c commands the image capturing unit 32 to capture the live view image.

For example, as shown in Fig. 15(b), at the timings of capture of the first through the third frames, the image capturing control unit 34c may cause the first image data for processing D1 for which the first image capture conditions are set, the second image data for processing D2 for which the second image capture conditions are set, and the third image data for processing D3 for which the third image capture conditions are set to be captured, respectively. At the fourth frame and subsequently, the image capturing control unit 34c causes the live view images LV1, LV2, LV3... to be captured sequentially, and the control unit 34 causes the display unit 35 to display these live view images LV1, LV2, LV3... sequentially.

Furthermore, it would also be acceptable for the image capturing control unit 34c to cause the image capturing unit 32 to capture the image data for processing at the timing that, during display of the live view image, the user performs actuation for terminating the display of the live view image. In other words, when an actuation signal is inputted from the actuation member 36 corresponding to actuation to command termination of the display of the live view image, the image capturing control unit 34c outputs to the image capturing unit 32 a signal commanding termination of capture of the live view image. And, when the image capturing unit 32 terminates capture of the live view image, the image capturing control unit 32c outputs a signal to the image capturing unit 32 commanding the capture of the image data for processing.

For example, as shown in Fig. 15(c), if actuation to terminate the display of the live view image is performed at the N-th frame, then the image capturing control unit 34c may, for the three subsequent frames numbers (N+1), (N+2), and (N+3), cause the first image data for processing D1 for which the first image capture conditions are set, the second image data for processing D2 for which the second image capture conditions are set, and the third image data for processing D3 for which the third image capture conditions are set to be captured, respectively. In this case it will be acceptable, during the interval from the (N+1)-th frame to the (N+3)-th frame, for the control unit 34 to cause the display unit 35 to display the live view image LV1 that was captured in the N-th frame; or it will also be acceptable not to display any live view image.

Yet further, it would also be acceptable for the image capturing control unit 34c to capture image data for processing for all of the frames of the live view image. In this case, the setting unit 34b sets image capture conditions for the entire area of the image capturing surface of the image capturing element 32a, that are different for each frame. And the control unit 34 causes the display unit 35 to display the image data for processing that has been generated as a live view image.

The image capturing control unit 34c may cause the image data for processing to be captured if a change has occurred in the composition of the image that is being captured during the display of the live view image. For example, if the position of some element of the photographic subject detected by the control unit 34 (i.e. by the setting unit 34b) on the basis of the live view image deviates by a predetermined distance or greater, as compared with the position of that element of the photographic subject detected in the previous frame, then the image capturing control unit 34c may command the image data for processing to be captured.

### (2) Upon Actuation of Actuation Member 36

Half press actuation of the release button by the user, in other words an actuation that commands preparations to be made for image capture, and full press actuation of the release button, in other words an actuation that commands main image capturing to be performed, are examples of actuations of the actuation member 36 for causing the image data for processing to be captured.

### (2-1) Half Press Actuation of Release Button

When half press actuation of the release button by the user, in other words an actuation that commands preparations to be made for image capture, is performed, an actuation signal is outputted from the actuation member 36. This actuation signal is outputted from the actuation member 36 during the period while the release button is being half pressed by the user. When such an actuation signal corresponding to the start of actuation to command preparations to be made for image capture is inputted from the actuation member 36, then the image capturing control unit 34c of the control unit 34 outputs a signal to the image capturing unit 32 to command capture of the image data for processing. In other words, the image capturing unit 32 captures the image data for processing according to the start of actuation by the user for commanding preparations to be made for image capture.

It should be understood that it would be acceptable for the image capturing control unit 34c to cause the image capturing unit 32 to capture the image data for processing at the timing that the actuation of the release button by the user has ended, for example due to a transition from half press actuation to full press actuation. In other words, it will be acceptable for the image capturing control unit 36c to output a signal to the image capturing unit 32 to command image capture, at the timing that the actuation signal from the actuation member 36 corresponding to actuation for commanding preparations to be made for image capture ceases to be inputted.

Alternatively, it would also be acceptable for the image capturing control unit 34c to cause the image capturing unit 32 to capture the image data for processing while the release button is being half pressed by the user. In this case, the image capturing control unit 34c will be able to output a signal to the image capturing unit 32 for commanding image capture in a predetermined cycle. Due to this, it is possible to capture the image data for processing while actuation for half pressing the release button is being performed by the user. Alternatively, it would also be acceptable for the image capturing control unit 34c to output a signal to the image capturing unit 32 for commanding image capture, coordinated with the timing of capture of the live view image. In this case, the image capturing control unit 34c may output a signal to the image capturing unit 32 for commanding capture of the image data for processing at a timing related to the frame rate of the live view image, for example at the timings that the even numbered frames are captured, or at the timing after ten frames of the live view image are captured.

Furthermore, if the image data for processing is being captured during display of the live view image, then it would also be acceptable not to perform capture of the image data for processing on the basis of half press actuation of the release button.

### (2-2) Full Press Actuation of Release Button

When full press actuation of the release button is performed by the user, in other words when a command for main image capturing is issued, the actuation member 36 outputs an actuation signal. And, when this actuation signal from the actuation member 36 corresponding to actuation commanding main image capturing is inputted, the image capturing control unit 34c of the control unit 34 outputs a signal to the image capturing unit 32 commanding main image capturing. After capturing of the main image data by this main image capturing has been performed, the image capturing control unit 34c outputs a signal that commands capture of the image data for processing. In other words, after a command for image capture has been issued by the user, the image capturing unit 32 captures the image data for processing after capturing the main image data by the main image capturing.

It should be understood that it would also be acceptable for the image capturing control unit 34c to cause the image capturing unit 32 to capture the image data for processing before capturing the main image data. Additionally, it would also be acceptable not to perform capture of the image data for processing upon the basis of half press actuation of the release button, if the image data for processing is being captured during display of the live view image.

It should be understood that the actuation of the actuation member 36 for capturing the image data for processing is not limited to half press actuation or full press actuation of the release button. For example it will also be acceptable for the image capturing control unit 34c to command capture of the image data for processing, when an operation related to image capture other than actuation of a release button is performed by the user. For example, an actuation to change the image magnification, an actuation to change the aperture, an actuation related to focus adjustment (for example, selection of a point for focusing), and so on are operations related to image capture. When the actuation for changing is completed and the new setting is confirmed, the image capturing control unit 34c may cause the image capturing unit 32 to capture the image data for processing. Due to this, it is possible to generate image data for processing that has been captured under the same conditions as those of the main image capturing, even if the main image capturing is performed under the new settings,

It should be understood that it would also be acceptable for the image capturing control unit 34c to cause the image data for processing to be captured if an actuation is performed on a menu screen. If an actuation that is related to image capture is performed on a menu screen, then the probability is high that new settings will be implemented for the main image capturing. In this case, the image capturing unit 32 performs capture of the image data for processing during the period while the menu screen is open. It will be acceptable for the capturing of the image data for processing to be performed in a predetermined cycle; or alternatively the image data could be captured at the frame rate at which the live view image is captured.

When an actuation that is not related to image capture is performed, such as for example actuation for reproducing and displaying an image, or actuation during reproduction and display, or actuation for adjusting the clock, then the image capturing control unit 34c does not output any signal commanding capture of the image data for processing. In other words, at such a time, the image capturing control unit 34c does not cause the image capturing unit 32 to perform capture of the image data for processing. Due to this, it is possible to ensure that the image data for processing is not captured, when the probability is low that a new setting will be implemented for the main image capturing, or the probability is low that main image capturing will be performed.

Furthermore, if the actuation members 36 include a dedicated button for commanding capture of the image data for processing, then the image capturing control unit 34c may command the image capturing unit 32 to capture the image data for processing when this dedicated button is actuated by the user. Moreover, if the actuation members 36 are adapted so that the output of the actuation signal is continued while the user is actuating this dedicated button, it will also be acceptable for the image capturing control unit 34c to cause the image capturing unit 32 to capture the image data for processing in a predetermined cycle during the period that actuation of the dedicate button is being performed, or to capture the image data for processing at the time point that actuation of the dedicated button is terminated. Due to this, it is possible to perform capture of the image data for processing at a timing that is desired by the user.

Yet further, it would also be acceptable for the image capturing control unit 34c to command the image capturing unit 32 to capture the image data for processing when the power supply of the camera is turned on.

With the camera 1 of this embodiment, it will be acceptable for the image data for processing to be captured by applying all of the methods described above by way of example, or for at least one of those methods to be implemented, or for the user to be enabled to perform selection of the method to be employed from among various methods. Such user selection could, for example, be made from a menu screen that is displayed on the display unit 35.

### Generation of Image Data for Processing Employed in Detection and Setting Processing

The image capturing control unit 34c causes image data for processing employed in the detection processing and the setting processing to be captured at various timings that are similar to the timing of generating the image data for processing used in the image processing described above. In other words, the same image data can be employed as the image data for processing that is used for the detection and setting processing, and as the image data for processing that is used for image processing. In the following, the case will be explained of generating the image data for processing that is employed in the detection and setting processing at a timing that is different from the timing at which the image data for processing that is employed in the image processing is generated.

When full press actuation of the release button is performed by the user, the image capturing control unit 34c causes the image capturing unit 32 to perform capture of the image data for processing before causing it to perform capture of the main image data. In this case, it is possible to reflect the results detected by employing the latest image data for processing captured directly before the main image capturing and the setting results in the main image capturing.

The image capturing control unit 34c causes the image data for processing to be captured, even when an actuation not related to image capture is performed, for example an actuation for reproducing and displaying an image, an actuation during reproduction and display, or an actuation for adjusting the clock. In this case, it will be acceptable for the image capturing control unit 34c to generate a single frame of image data for processing, or alternatively it could generate a plurality of frames of image data for processing.

It should be understood that while, in the above explanation, an example has been given of a case in which the image data for processing is employed for the image processing, for the focus detection processing, for the photographic subject detection processing, and for the exposure setting processing, the present embodiment is not to be considered as being limited to the case in which the image data for processing is employed in all those processes; any system in which the image data for processing is employed in at least one of those processes is to be considered as being included in this embodiment. It would be acceptable for the system to be adapted so that it is possible for the user to select and confirm, from a menu screen that is displayed on the display unit 35, in which process or processes the image data for processing is to be employed.

### Explanation of Flow Chart

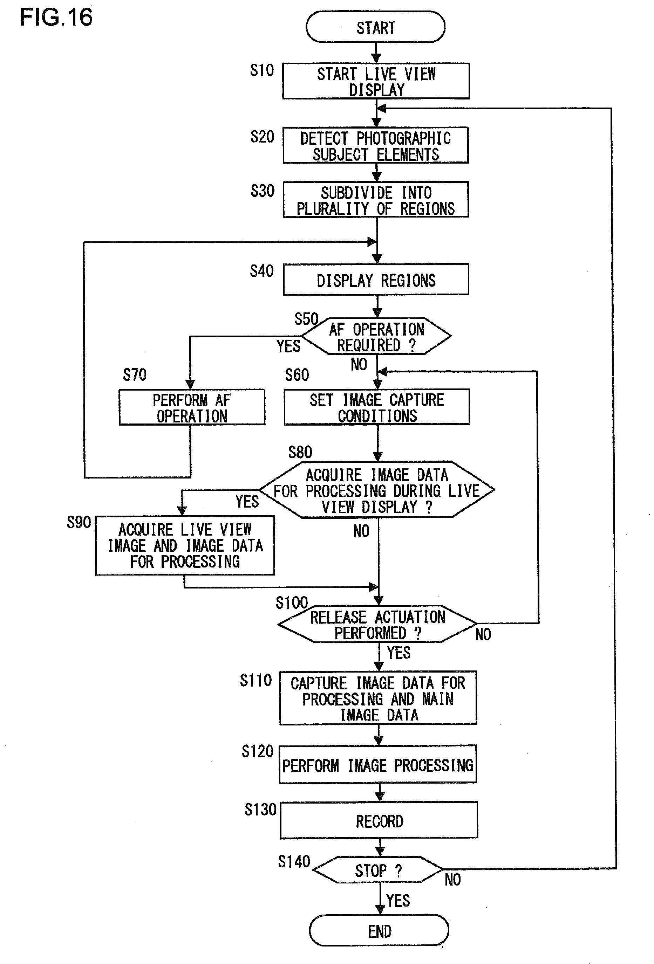

Fig. 16 is a flow chart for explanation of the flow of processing for setting image capture conditions for each region individually and performing image capturing processing. When a main switch of the camera 1 is turned on, the control unit 34 starts a program for executing the processing shown in Fig. 16. In step S10, the control unit 34 starts to provide a live view display upon the display unit 35, and then the flow of control proceeds to step S20.

In concrete terms, the control unit 34 commands the image capturing unit 32 to start acquisition of the live view image, and causes the live view images that are thus acquired to be repeatedly and sequentially displayed on the display unit 35. As described above, at this time point, the same image capture conditions are set for the entire area of the image capturing chip 111, in other words for the entire screen.

It should be understood that, if a setting is made for performing AF operation during the live view display, then, by performing focus detection processing, the AF calculation unit 34d of the control unit 34 controls AF operation to adjust the focus to the element of the photographic subject that corresponds to a predetermined point for focusing.

Furthermore, if no setting is made for performing AF operation during the live view display, then the AF calculation unit 34d of the control unit 34 performs AF operation at the time point that AF operation is subsequently commanded.

In step S20, the object detection unit 34a of the control unit 34 detects one or more elements in the photographic subject from the live view image, and then the flow of control proceeds to step S30. In step S30, the setting unit 34b of the control unit 34 divides the screen of the live view image into regions containing elements of the photographic subject, and then the flow of control proceeds to step S40.

In step S40, the control unit 34 performs display of the regions on the display unit 35. And, as shown in Fig. 6, among the divided regions, the control unit 34 displays that a region that is the subject of setting (or of changing) its image capture conditions as accentuated. Furthermore, the control unit 34 causes the display unit 35 to display the image capture conditions setting screen 70, and then the flow of control proceeds to step S50.

It should be understood that, if the display position of some other main photographic subject in the display screen is tapped by the finger of the user, then the control unit 34 changes the region that includes this main photographic subject to become the region that is the subject of setting (or of changing) its image capture conditions, and causes this region to be displayed as accentuated.

In step S50, the control unit 34 makes a decision as to whether or not AF operation is required. If, for example, the focal point adjustment state has changed due to movement of the photographic subject, or if the position of the point for focusing has changed due to user actuation, or if due to user actuation a command has been issued for AF operation to be performed, then the control unit 34 reaches an affirmative decision in step S50 and the flow of control is transferred to step S70. But if the focal point adjustment state has not changed, and the position of the point for focusing has not changed due to user actuation, and no command has been issued due to user actuation for AF operation to be performed, then the control unit 34 reaches a negative decision in step S50 and the flow of control is transferred to step S60.

In step S70, the control unit 34 causes AF operation to be performed, and then the flow of control returns to step S40. After the flow of control has returned to step S40, the control unit 34 repeats processing similar to that described above on the basis of the live view image that is acquired after the AF operation.

On the other hand, in step S60, according to user actuation, the setting unit 34b of the control unit 34 sets the image capture conditions for the region that is being displayed as accentuated, and then the flow of control is transferred to step S80. In other words, image capture conditions are set for each of the plurality of regions. It should be understood that the changing over of the display on the display unit 35 according to user actuation in the step S60, and the setting of the image capture conditions, are as described above.

In step S80, the control unit 34 makes a decision as to whether or not image capture for processing should be performed while the live view image is being displayed. If the current setting is that image capture for processing is to be performed while the live view image is being displayed, then an affirmative decision is reached in step S80 and the flow of control proceeds to step S90. On the other hand, if the current setting is that image capture for processing is not to be performed while the live view image is being displayed, then a negative decision is reached in step S80 and the flow of control is transferred to step S100 that will be described hereinafter.

In step S90, the image capturing control unit 34c of the control unit 34 commands the image capturing unit 32 to perform capture of the image data for processing corresponding to each of the image capture conditions that have been set on a predetermined cycle during capture of the live view image, and then the flow of control proceeds to step S100. It should be understood that the image data for processing that is captured at this time is stored in a storage medium (not shown in the figures). In step S100, the control unit 34 determines whether or not an image capture command has been issued. If the release button included in the actuation members 36 has been actuated, or a display icon for commanding image capture has been actuated, then the control unit 34 reaches an affirmative decision in step S100 and the flow of control proceeds to step S110. On the other hand, if no image capture command has been issued, then the control unit 34 reaches a negative decision in step S100 and the flow of control returns to step S60.

In step S100, the control unit 34 performs image capture processing of the image data for processing and of the main image data. In other words the image capturing control unit 34c, along with capturing the image data for processing under each of the various different image capture conditions that were set in step S60, also controls the imaging element 32a so as to perform main image capture under the image capture conditions that were set for each of the regions described above in step S60, thus acquiring the main image data, and then the flow of control proceeds to step S120. It should be understood that, when capturing the image data for processing to be employed in detection and setting processing, capture of the image data for processing is performed before capture of the main image data. Furthermore, it would also be acceptable not to perform capture of the image data for processing in step S110, when the image data for processing is being captured in step S90.

In step S120, the image capturing control unit 34c of the control unit 34 sends a command to the image processing unit 33, and thereby causes predetermined image processing to be performed upon the main image data obtained by the above described image capture by employing the image data for processing obtained in step S90 or step S110, and then the flow of control proceeds to step S130. This image processing may include the pixel defect correction processing, the color interpolation processing, the contour emphasis processing, and the noise reduction processing described above.

In step S130, the control unit 34 sends a command to the recording unit 37 and causes it to record the image data after image processing on the recording medium not shown in the figures, and then the flow of control proceeds to step S140.

In step S140, the control unit 34 takes a decision as to whether or not a stop actuation has been performed. If a stop actuation has been performed, then the control unit 34 reaches an affirmative decision in step S140 and the processing of Fig. 16 terminates. But if no stop actuation has been performed, then the control unit 34 reaches a negative decision in step S140 and the flow of control returns to step S20. If the flow of control has returned to step S20, then the control unit 34 repeats the processing described above.

It should be understood that, in the example described above, it was assumed that the main image capturing is performed under the image capture conditions that were set in step S60, and processing of the main image data is performed by employing the image data for processing that was captured in step S90 or step S110. However, if image capture conditions that are different for each region are set during capture of the live view image, then the focus detection processing, the photographic subject detection processing, and the image capture conditions setting processing are performed on the basis of the image data for processing that was captured during display of the live view image in step S90.

While, in the explanation given above, an example has been described in which the laminated type imaging element 100 is employed as the image capturing element 32a, it is not necessary for the imaging element to be built of the laminated type, provided that it is possible to set image capture conditions individually for each of a plurality of blocks in the imaging element (i.e. in the image capturing chip 111).

According to the embodiment described above, the following advantageous operational effects are obtained.
(1) The camera 1 comprises the input unit 33a and the processing unit 33b. The input unit 33a inputs the main image data that is captured by setting the first image capture conditions for the first region on the image capturing surface of the image capturing unit 32, and setting the second image capture conditions that are different from the first image capture conditions for the second region on the image capturing surface, and the image data for processing that is captured by setting the third image capture conditions for the first region and the second region. And, the processing unit 33b performs image processing on the first partial image data in the main image data, that corresponds to the first region by employing the image data for processing. Due to this, the camera 1 is able to generate images in an appropriate manner for each of the regions having different image capture conditions. In other words, it is possible to generate the main image data in an appropriate manner from the image data generated for each of the regions. For example, it is possible to suppress any discontinuity or strangeness that may appear in the main image data that are generated, caused by differences in the image capture conditions between the various regions.
(2) By employing the image data for processing, the processing unit 33b performs image processing on the boundary portion data corresponding to the boundary portion 80 of the first region and the second region in the first partial image data. Due to this, the camera 1 is able to perform image processing in an appropriate manner while employing image data that has been generated for each of the regions for which the image capture conditions are different. For example, it is possible to suppress any discontinuity or strangeness that may appear in the main image data after image processing, due to differences in the image capture conditions at the boundaries of the various regions.
(3) The processing unit 33b performs image processing on the boundary portion data of the main image data by employing the image data corresponding at least to the second region in the image data for processing. Due to this, the camera 1 is able to perform image processing in an appropriate manner while employing image data that has been generated for each of the regions for which the image capture conditions are different. For example, it is possible to suppress any discontinuity or strangeness that may appear in the main image data after image processing, due to differences in the image capture conditions at the boundaries of the various regions.
(4) When performing image processing on a pixel for attention P in the data for the boundary portion 80 of the main image data by employing reference pixels Pr that surround the pixel for attention and correspond to the first region and the second region, the processing unit 33b employs, in the image processing for the reference pixels Pr that correspond to the second region, the image data for processing at positions corresponding to the positions of the reference pixels Pr in the main image data. Due to this, the camera 1 is able to perform image processing in an appropriate manner while employing image data that has been generated for each of the regions for which the image capture conditions are different. For example, it is possible to suppress any discontinuity or strangeness that may appear in the main image data, due to differences in the image capture conditions between the various regions.
(5) For the reference pixels Pr corresponding to the first region in the main image data, the processing unit 33b further employs the main image data at the positions of those reference pixels Pr in the image processing. Due to this, the camera 1 is able to perform image processing in an appropriate manner by employing the image data that has been generated for each of the regions whose image capture conditions are different.
(6) For the reference pixels Pr corresponding to the first region in the main image data, the processing unit 33b further employs the image data for processing that corresponds to the positions of those reference pixels Pr in the main image data in the image processing. Due to this, the camera 1 is able to perform image processing in an appropriate manner by employing the image data that has been generated for each of the regions whose image capture conditions are different. For example, it is possible to suppress any discontinuity or strangeness that may appear in the image after image processing, due to differences in the image capture conditions at the boundaries of the various regions.
(7) The image capturing control unit 34c controls the timing at which main image capturing is performed by the image capturing unit 32, and the timing at which capture of the image data for processing is performed. Due to this, it becomes possible to acquire the image data for processing that is employed in image processing of the main image data.
(8) The image capturing control unit 34c causes the image capturing unit 32 to capture at least one frame of the image data for processing by causing it to perform capture of the image data for processing between capturing frames of the live view image. By capturing the image data for processing during capture of the live view image, it becomes possible to perform image processing in an appropriate manner by employing the image data for processing during capture of the main image data.
(9) Before causing the image capturing unit 32 to start capture of the live view image in the image capture preparation state, or each time capture of a predetermined number of frames of the live view image is performed after having caused the image capturing unit 32 to start capture of the live view image, the image capturing control unit 34c causes capture of the image data for processing to be performed and causes at least one frame of the image data for processing to be captured. By capturing the image data for processing during capture of the live view image, it becomes possible to perform image processing in an appropriate manner by employing the image data for processing during capture of the main image data.
(10) When actuation is performed to command the main image capturing, the image capturing control unit 34c causes the image capturing unit 32 to capture at least one frame of the image data for processing before the image capturing unit 32 performs the main image capturing, or after it has performed the main image capturing. By capturing the image data for processing at the stage of transition from the capture of the live view image to the main image capturing, it becomes possible to perform the image processing in an appropriate manner during capture of the main image data by employing the image data for processing. And, if the image data for processing is captured after the main image capturing, then it is possible to perform the main image capturing without missing the chance of a good photographic shot.
(11) After the main image capture by the image capturing unit 32 has ended, and before the display unit 35 displays the live view image again, the image capturing control unit 34c causes the image capturing unit 32 to capture at least one frame of the image data for processing. Due to this, it is possible to prepare the image data for processing in preparation for new main image capture.
(12) When command actuation is performed related to image capture, including a command for preparation for the main image capturing and a command for the main image capturing, then the image capturing control unit 34c causes the image capturing unit 32 to perform capture of the image data for processing. Due to this, in a case in which the image capture conditions for the main image capturing is likely to be changed from those in the current state, by capturing the image data for processing in advance, it becomes possible to perform image processing in an appropriate manner by employing the image data for processing when capturing the main image data.
(13) The image capturing control unit 34c causes the image capturing unit 32 to capture at least one frame of the image data for processing while actuation is being performed for commanding preparation for the main image capturing. Due to this, it becomes possible to capture the image data for processing before the main image capturing, and to perform image processing in an appropriate manner by employing the image data for processing in the capture of the main image data.
(14) When an actuation is performed to command main image capturing, the image capturing control unit 34c causes the image capturing unit 32 to capture at least one frame of the image data for processing before the image capturing unit 32 performs the main image capturing, or after it has performed the main image capturing. Due to this, it becomes possible to capture the image data for processing before performing the main image capturing, and to perform image processing in an appropriate manner for capturing the main image data by employing the image data for processing. And, if the image data for processing is captured after the main image capturing, then it is possible to perform the main image capturing without missing the chance of a good photographic shot.
(15) When actuation is performed to command capture of the image data for processing, the image capturing control unit 34c causes the image capturing unit 32 to capture at least one frame of the image data for processing. Due to this, the image data for processing that is suitable for image processing for the main image data can be captured in response to actuation of a dedicated button by the user at the timing that he desires, such as when he has decided that the probability is high that the image capture conditions may change, or the like.
(16) The image capturing unit 32 performs capture of the image data for processing over a partial region of the image capturing surface. Due to this, it is possible to acquire image data for processing for that region in the main image data for which image processing is required.
(17) The image capturing unit 32 performs capture of the image data for processing in the central portion of the image capturing surface, or in a region whose position has been specified. Due to this, it is possible to acquire image data for processing for regions in the main image data for which image processing is required.
(18) If capture of the image data for processing is performed for a plurality of frames, then the image capturing unit 32 causes the image capture conditions to be the same, or to be different, for the plurality of frames. Due to this, even if the image capture conditions are different between the plurality of divided regions, it is still possible to capture image data for processing to be employed for each of the regions.
(19) If the image capture conditions are made to be different for a plurality of frames of the image data for processing, then, among the plurality of frames, the setting unit 34b determines the image capture conditions for the next frame on the basis of the image data for processing that has been acquired for the previous frame. Due to this, it is possible to capture image data for processing that is suitable for image processing, even if the image capture conditions change during the display of the live view image.
(20) When an actuation is performed to designate image capture conditions, the setting unit 34b sets the image capture conditions that have thus been designated, and causes capture of the image data for processing to be performed. Due to this, it is possible to capture image data for processing that is suitable for image processing, for the main image data to which the image capture conditions desired by the user are applied.

The following modifications also come within the scope of the present invention, and moreover it would be possible to combine one or a plurality of these modifications with the embodiment described above.

### Variant Embodiment #1

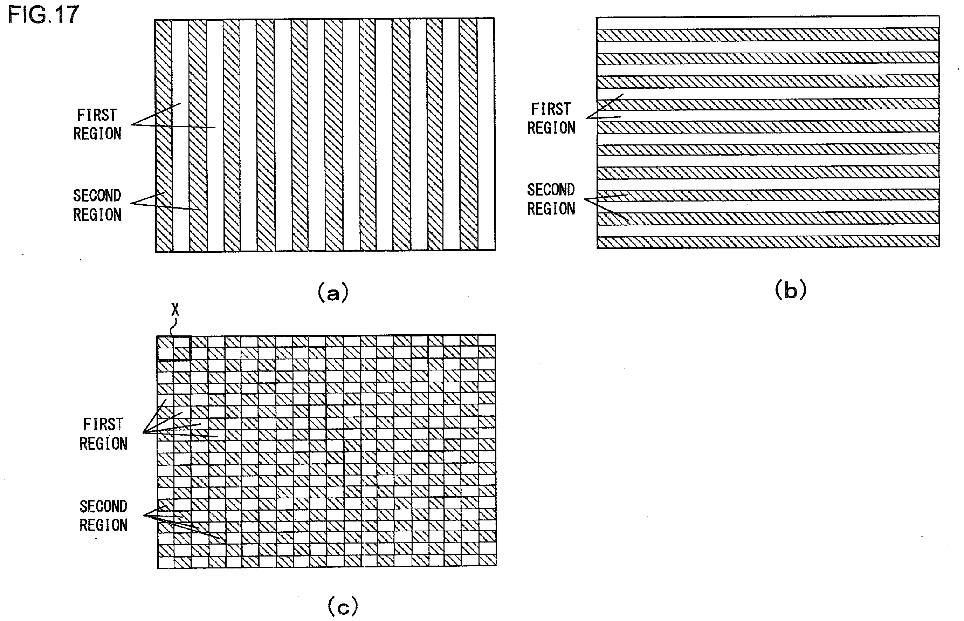

Fig. 17(a) through 17(c) are figures showing various examples of arrangements of the first region and the second region in the image capturing surface of the imaging element 32a. According to the example shown in Fig. 17(a), the first region consists of the group of the even numbered columns, and the second region consists of the group of the odd numbered columns. In other words, the image capturing surface is subdivided into the even numbered columns and the odd numbered columns.

And, according to the example shown in Fig. 17(b), the first region consists of the even numbered rows, and the second region consists of the odd numbered rows. In other words, the image capturing surface is subdivided into the even numbered rows and the odd numbered rows.

Moreover, according to the example shown in Fig. 17(c), the first region consists of the blocks on the even numbered rows in the odd numbered columns and the blocks on the odd numbered rows in the even numbered columns. And the second region consists of the blocks on the even numbered rows in the even numbered columns and the blocks on the odd numbered rows in the odd numbered columns. In other words, the image capturing surface is subdivided into a checkerboard pattern. The first image capture conditions are set for the first region, and the second image capture conditions different from the first image capture conditions are set for the second region.

In each of Fig. 17(a) through Fig. 17(c), by using the photoelectrically converted signals read out from the imaging element 32a after capture of one frame has been performed, a first image that is based on the photoelectrically converted signals read out from the first region and a second image that is based on the photoelectrically converted signals read out from the second region are both generated. According to this Variant Embodiment #1, the first image and the second image are captured at the same angle of view and include a common photographic subject image.

In this Variant Embodiment #1, the control unit 34 employs the first image for display, and employs the second image as the image data for processing. In concrete terms, the control unit 34 causes the display unit 35 to display the first image as a live view image. Furthermore, the control unit 34 employs the second image as image data for processing. In other words, the image processing is caused to be performed by the processing unit 33b while employing the second image, the photographic subject detection processing is caused to be performed by the object detection unit 34a by employing the second image, the focus detection processing is caused to be performed by the AF calculation unit 34d by employing the second image, and the exposure calculation processing is caused to be performed by the setting unit 34b by employing the second image.

It should be understood that it would also be acceptable for the region for acquisition of the first image and the region for acquisition of the second image to change for each frame. For example it would be acceptable, with the N-th frame, for the first image from the first region to be taken as the live view image and the second image from the second region to be captured as the image data for processing, while, with the (N+1)-th frame, the first image is taken as the image data for processing and the second image is captured as the live view image, with this alternating operation also being repeated in subsequent frames.
1. As one example, the control unit 34 may capture the live view image under first image capture conditions, and may set these first image capture conditions to conditions that are appropriate for display by the display unit 35. These first image capture conditions are set to be the same over the entire area of the image capturing screen. On the other hand, the control unit 34 may capture the image data for processing under second image capture conditions, and may set these second image capture conditions to conditions that are appropriate for the focus detection processing, for the photographic subject detection processing, and for the exposure calculation processing. These second image capture conditions, as well, are set to be the same over the entire area of the image capturing screen.
   It should be understood that, if the conditions that are appropriate for the focus detection processing, for the photographic subject detection processing, and for the exposure calculation processing are different from one another, then it would also be acceptable for the control unit 34 to make the second image capture conditions that are set for the second region be different for each frame. For example, the second image capture conditions for the first frame may be set to be conditions that are suitable for the focus detection processing, the second image capture conditions for the second frame may be set to be conditions that are suitable for the photographic subject detection processing, and the second image capture conditions for the third frame may be set to be conditions that are suitable for the exposure calculation processing. In these cases, for all the frames, the second image capture conditions are made to be the same over the entire area of the image capturing screen.
2. As another example, it would also be acceptable for the control unit 34 to vary the first image capture conditions over the image capturing screen. The setting unit 34b of the control unit 34 may set different first image capture conditions for each of the regions divided by the setting unit 34b and including a photographic subject element. On the other hand, the control unit 34 may set the second image capture conditions to be the same over the entire area of the image capturing screen. The control unit 34 sets the second image capture conditions to conditions that are appropriate for the focus detection processing, for the photographic subject detection processing, and for the exposure calculation processing. However, if the conditions that are respectively appropriate for the focus detection processing, for the photographic subject detection processing, and or the exposure calculation processing are mutually different, then it will be acceptable for the image capture conditions set for the second region to be different for each frame.
3. Moreover, as yet another example, it will also be acceptable for the control unit 34 to set the first image capture conditions to be the same over the entire area of the image capturing screen, while on the other hand making the second image capture conditions vary over the image capturing screen. For example, the second image capture conditions may be set to be different for each of the regions divided by the setting unit 34b and including a photographic subject element. Also, in this case, if the conditions that are appropriate for the focus detection processing, for the photographic subject detection processing, and for the exposure calculation processing are different from one another, then the image capture conditions that are set for the second region may be different for each frame.
4. Still further, as yet another example, the control unit 34 may make the first image capture conditions vary over the image capturing screen, and may also make the second image capture conditions vary over the image capturing screen. For example, the first image capture conditions may be set to be different for each of the regions divided by the setting unit 34b and including a photographic subject element, and the second image capture conditions may be set to be different for each of the regions divided by the setting unit 34b and including a photographic subject element.

In Fig. 17(a) through Fig. 17(c), it would also be acceptable for the ratios of areas between the first region and the second region to be different. For example, on the basis of actuation by the user or a decision by the control unit 34, the control unit 34 may set the area ratio of the first region to be higher than that of the second region, or may set the area ratio of the first region and the area ratio of the second region to be mutually equal as shown by way of example in Figs. 17(a) through 17(c), or may set the area ratio of the first region to be lower than that of the second region. By making the area ratios be different between the first region and the second region, it is possible to make the first image be of higher resolution as compared to the second image, or to make the resolutions of the first image and the second image be mutually equal, or to make the second image be of higher resolution as compared to the first image.

For example, in the region X surrounded by the thick line in Fig. 17(c), by adding and averaging the image signals from the blocks in the second region, the first image may be made to be of higher resolution as compared with the second image. Because of this, it is possible to obtain image data equivalent to that in the case in which the image capture region for processing is increased or reduced in size along with change of the image capture conditions.

### Variant Embodiment #2

In the embodiment described above, an example has been explained in which the setting unit 34b of the control unit 34 detects the photographic subject elements on the basis of the live view image, and divides the screen of the live view image into regions that include the respective photographic subject elements. However, in Variant Embodiment #2, it would also be acceptable, if a photometric sensor is disposed that is separate from the imaging element 32a, to arrange for the control unit 34 to divide the regions on the basis of the output signal from this photometric sensor.

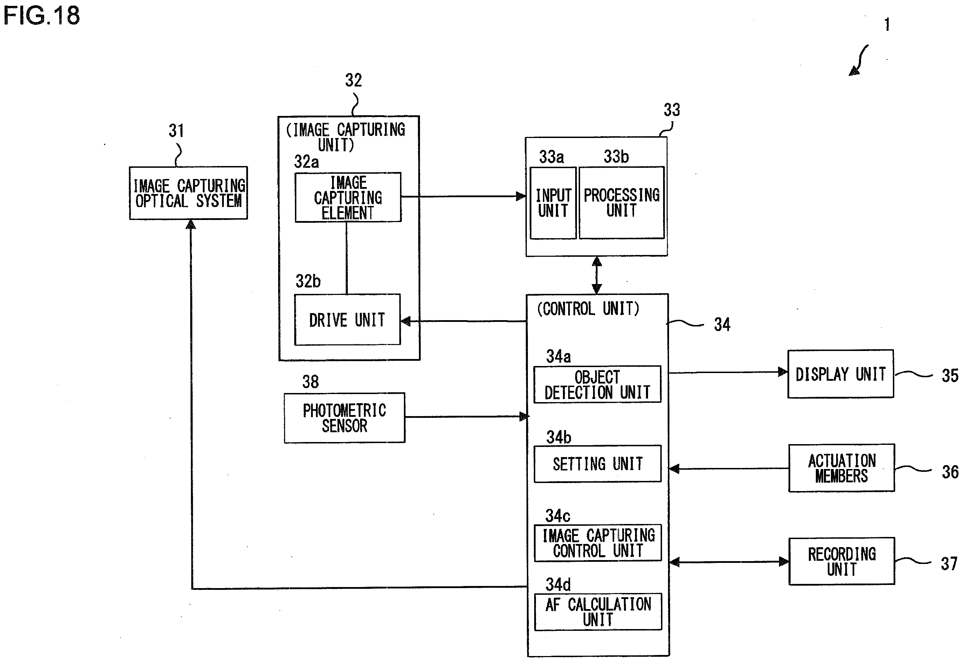

Fig. 18 is a block diagram showing an example of the structure of principal portions of a camera according to Variant Embodiment #2. In addition to the structure of the embodiment shown in Fig. 1, this camera 1 is additionally provided with a photometric sensor 38. The control unit 34 performs subdivision into a foreground region and a background region on the basis of the output signal from the photometric sensor 38. In concrete terms, the live view image that has been acquired by the imaging element 32b is subdivided into a foreground corresponding to a region that has been determined to be the foreground region from the output signal from the photometric sensor 38, and a background corresponding to a region that has been determined to be the background region from the output signal from the photometric sensor 38.

Furthermore, for the foreground region, the control unit 34 arranges the first region and the second region in the image capturing surface of the imaging element 32a, as shown by way of example in Figs. 17(a) through 17(c). On the other hand, for the background region, the control unit 34 arranges only the first region in the image capturing surface of the imaging element 32a. The control unit 34 employs the first image for display and employs the second image for detection.

According to Variant Embodiment #2, it is possible to subdivide the live view image acquired by the imaging element 32b into regions by employing the output signal from the photometric sensor 38. Furthermore, for the foreground region, it is possible to obtain a first image for display and a second image for detection, while, for the background region, it is possible to obtain just a first image for display. Even if the image capturing environment for the photographic subject changes during the display of the live view image, still it is possible newly to correct the settings of the foreground region and the background region by performing subdivision into regions by utilizing the output from the photometric sensor 38. Moreover, it should be understood that the present invention is not to be considered as being limited to this example in which the image capturing environment of the photographic subject is detected by the photometric sensor 38; for example, it would also be acceptable to perform the subdivision into regions according to the image capturing environment for the photographic subject, on the basis of the output of an acceleration sensor that detects the acceleration of the camera 1, or the like.

### Variant Embodiment #3

In Variant Embodiment #3, it is arranged for the image processing unit 33 not to lose the contours of the photographic subject elements during the image processing described above (for example, during the noise reduction processing). In general, smoothing filter processing is employed when noise reduction is to be performed. But, if a smoothing filter is employed, then the downside of the beneficial effect for noise reduction is that the boundary of a photographic subject element may become blurred.

Accordingly the processing unit 33b of the image processing unit 33 may, for example, compensate for such blurring of the boundary of a photographic subject element as described above by performing contrast adjustment processing in addition to the noise reduction processing, or along with the noise reduction processing. In Variant Embodiment #3, the processing unit 33b of the image processing unit 33 sets a curve shaped like a letter-S as a grayscale conversion (gradation conversion) curve (to perform so-called letter-S conversion). By performing contrast adjustment employing such letter-S conversion, the processing unit 33b of the image processing unit 33 stretches the gradations both of the brightest data and of the darkest data so as to increase the gradation levels of both the brightest data and also of the darkest data, while compressing the image data having intermediate gradations so as to reduce its gradation levels. As a result of this, the amount of image data whose brightness is intermediate is reduced, and the amount of data that is classified as either very bright or very dark is increased, so that blurring at the boundaries of the photographic subject elements is compensated.

According to Variant Embodiment #3, it is possible to compensate for blurring of the boundary of a photographic subject element by emphasizing the contrast or light and dark of the image.

### Variant Embodiment #4

It would also be acceptable to provide a plurality of the image processing units 33, and to arrange for them to perform image processing in parallel. For example, while performing image processing on image data captured for a region A of the image capturing unit 32, image processing may be performed for image data captured for a region B of the image capturing unit 32. It will be acceptable for the plurality of image processing units 33 to perform the same type of image processing, or for them to perform different types of image processing. In other words, similar types of image processing may be performed by applying the same parameters to the image data for the region A and to the image data for the region B; or, alternatively, different types of image processing may be performed by applying different parameters to the image data for the region A and to the image data for the region B.

In a case in which a plurality of the image processing units 33 are provided, it will be acceptable for image processing to be performed by one of the image processing units on data to which first image capture conditions have been applied, and for image processing to be performed by another of the image processing units on data to which second image capture conditions have been applied. Moreover, the number of image processing units is not to be considered as being limited to two as described above; for example, it would also be acceptable to arrange to provide the same number of image processing units as the number of variants of image capture conditions that can be set. In other words, each of the image processing units would be in charge of image processing for one of the regions to which different image capture conditions have been applied. According to Variant Embodiment #4, it is possible to proceed in parallel with capturing images under different image capture conditions for each region, and with performing image processing upon the image data for the images that have been obtained for each of the regions described above.

### Variant Embodiment #5

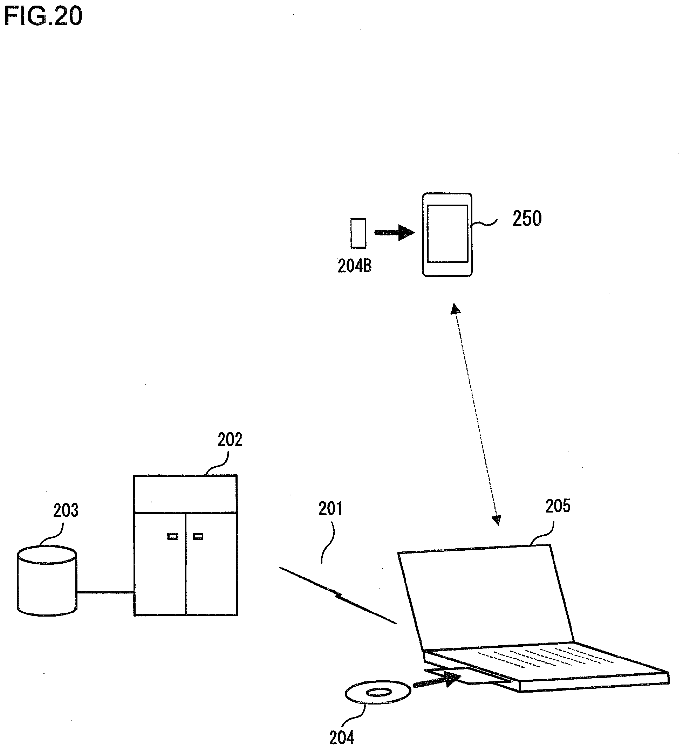

In the explanation described above, the camera 1 was explained as an example, but it would also be acceptable to apply the present invention to a high-functioning portable telephone handset 250 (refer to Fig. 20) such as a smartphone that is equipped with a camera function, or to a mobile device such as a tablet terminal, or the like.

### Variant Embodiment #6

In the embodiments described above, the camera 1 in which the image capturing unit 32 and the control unit 34 are built together as a single electronic device has been explained by way of example. However instead of this, for example, it would also be acceptable to arrange to implement a structure such as an image capturing system 1B in which the image capturing unit 32 and the control unit 34 are provided separately, and in which the image capturing unit 32 is controlled via communication from the control unit 34.

In the following, an example will be described in which an image capturing device 1001 that includes the image capturing unit 32 is controlled from a control device 1002 that includes the control unit 34.

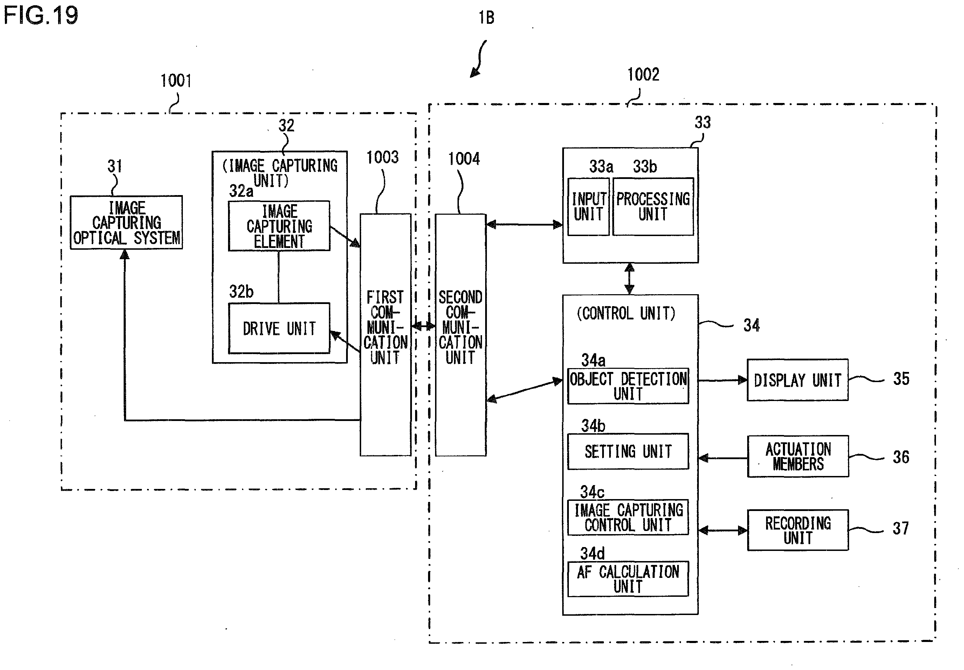

Fig. 19 is a block diagram showing an example of the structure of an image capturing system 1B according to Variant Embodiment #6. In Fig. 19, the image capturing system 1B comprises the image capturing device 1001 and the display device 1002. In addition to comprising the image capturing optical system 31 and the image capturing unit 32 such as explained in connection with the embodiment described above, the image capturing device 1001 also comprises a first communication unit 1003. Moreover, in addition to comprising the image processing unit 33, the control unit 34, the display unit 35, the actuation members 36, and the recording unit 37 such as explained in connection with the embodiment described above, the display device 1002 also comprises a second communication unit 1004.

The first communication unit 1003 and the second communication unit 1004 are capable of performing bidirectional image data communication according to a per se known technique, such as, for example, a wireless communication technique or an optical communication technique or the like.

It should be understood that it would also be acceptable to arrange for the image capturing device 1001 and the display device 1002 to be connected together by cable, so that the first communication unit 1003 and the second communication unit 1004 are capable of performing bidirectional image data communication.

In the image capturing system 1B, the control unit 34 performs control of the image capturing unit 32 by performing data communication via the second communication unit 1004 and the first communication unit 1003. For example, by predetermined control data being transmitted and received between the image capturing device 1001 and the display device 1002, on the basis of images as described above, the display device 1002 may divide the screen into a plurality of regions, may set different image capture conditions for each of the divided regions, and may read out the photoelectrically converted signals that have been photoelectrically converted in each region.

Since, according to Variant Embodiment #6, the live view image acquired by the image capturing device 1001 and transmitted to the display device 1002 is displayed upon the display unit 35 of the display device 1002, accordingly it is possible for the user to perform remote actuation from the display device 1002 that is located at a position separated from the image capturing device 1001.

The display device 1002 may, for example, be built as a high-functioning portable telephone handset 250 such as a smartphone. Moreover, the image capturing device 1001 may be built as an electronic device that incorporates the imaging element 100 of the laminated type described above.

It should be understood that, although an example has been explained in which the object detection unit 34a, the setting unit 34b, the image capturing control unit 34c, and the AF calculation unit 34d are provided to the control unit 34 of the display device 1002, it would also be acceptable to arrange to provide the object detection unit 34a, the setting unit 34b, the image capturing control unit 34c, and the AF calculation unit 34d at least in part to the image capturing device 1001.

### Variant Embodiment #7

As shown by way of example in Fig. 20, supply of the program to the camera 1 described above, or to a mobile device such as the high-functioning portable telephone handset 250 or a tablet terminal or the like, may be implemented by infrared radiation communication transmission to the mobile device from a personal computer 205 on which the program is stored, or by short distance wireless communication.

Supply of the program to the personal computer 205 may be performed by loading a recording medium 204 such as a CD-ROM or the like on which the program is stored into the portable computer 205, or by loading the program into the personal computer 25 by the method of transmission via a communication line 201 such as a network or the like. If the program is transmitted via such a communication line 201, then the program may be stored in a storage device 203 of a server 202 that is connected to that communication line, or the like.

It would also be possible to transmit the program directly to the mobile device by transmission via an access point (not shown in the figures) of a wireless LAN that is connected to the communication line 201. Moreover, it would also be acceptable to arrange to load a recording medium 204B such as a memory card or the like upon which the program is stored into the mobile device. In this manner, the program may be supplied as a computer program product in various formats, such as by provision upon a recording medium or via a communication line or the like.

Provided that the characteristics of the present invention are not lost, the present invention should not be considered as being limited to the embodiments described above: other forms that are considered to come within the scope of the technical concept of the present invention are also to be understood as being included within the range of the present invention.

Image capturing devices and image processing devices such as described below are also included in the embodiments and variant embodiments described above.
(1-1) An image capturing device, comprising: an image capturing element comprising an image capturing area that captures an image of a photographic subject, in which are disposed a first pixel that outputs a signal of charges generated by photoelectric conversion and second pixels, different from the first pixel, that output signals of charges generated by photoelectric conversion; a setting unit that sets an image capture condition for a first region of the image capturing area in which the first pixel is disposed and an image capture condition for a second region of the image capturing area, different from the first region, in which the second pixels are disposed; a selection unit that selects a pixel to be employed for interpolation of the first pixel of the first region to which a first image capture condition is set by the setting unit, from among a second pixel of the second region to which a second image capture condition that is different from the first image capture condition is set by the setting unit, and a second pixel of the second region to which a third image capture condition that is different from the second image capture condition is set by the setting unit; and a generation unit that generates an image of at least a part of a photographic subject that has been captured with the image capturing area by employing the signal outputted from the first pixel of the first region to which the first image capture condition is set, and interpolated with the signal outputted from the second pixel selected by the selection unit.
(1-2) The image capturing device as described in (1-1) above, wherein the selection unit selects a pixel to be employed for interpolation of the first pixel of the first region to which the first image capture condition is set by the setting unit, from among the second pixel of the second region to which the second image capture condition is set by the setting unit and the second pixel of the second region to which the third image capture condition is set by the setting unit, based on the difference between the first image capture condition and the second image capture condition and the difference between the first image capture condition and the third image capture condition.
(1-3) The image capturing device as described in (1-2) above, wherein the selection unit selects, as a pixel to be employed for interpolation of the first pixel of the first region to which the first image capture condition is set by the setting unit, the second pixel of the second region to which the image capture condition is set for which the difference is smaller among the difference between the first image capture condition and the second image capture condition, and the difference between the first image capture condition and the third image capture condition.
(1-4) The image capturing device as described in (1-1) above, wherein the selection unit selects a pixel to be employed for interpolation of the first pixel of the first region to which the first image capture condition is set by the setting unit, from among the second pixel of the second region to which the second image capture condition is set by the setting unit and the second pixel of the second region to which the third image capture condition is set by the setting unit, based on the variance between the first image capture condition and the second image capture condition and the variance between the first image capture condition and the third image capture condition.
(1-5) The image capturing device as described in (1-4) above, wherein the selection unit selects, as a pixel to be employed for interpolation of the first pixel of the first region to which the first image capture condition is set by the setting unit, the second pixel of the second region to which the image capture condition is set for which the difference is smaller among the difference between the first image capture condition and the second image capture condition, and the difference between the first image capture condition and the third image capture condition.
(1-6) The image capturing device as described in any one of (1-1) through (1-5) above, further comprising a storage unit that stores the signal outputted from the second pixel, and wherein: the setting unit sets the third image capture condition to the second region, before setting the second image capture condition to the second region; and the storage unit stores the signal outputted from the second pixel of the second region to which the third image capture condition is set by the setting unit.
(1-7) The image capturing device as described in (1-6) above, wherein the setting unit sets the first image capture condition for the first region, after setting the third image capture condition for the second region.
(1-8) The image capturing device as described in any one of (1-1) through (1-5) above, further comprising a storage unit that stores the signal outputted from the second pixel, and wherein: the setting unit sets the third image capture condition to the second region, after setting the second image capture condition to the second region; and the storage unit stores the signal outputted from the second pixel of the second region to which the second image capture condition is set by the setting unit.
(1-9) The image capturing device as described in (1-8) above, wherein the setting unit sets the first image capture condition for the first region, before setting the third image capture condition for the second region.
(1-10) The image capturing device as described in any one of (1-1) through (1-9) above, wherein the first pixel comprises a first photoelectric conversion unit that photoelectrically converts light incident via a filter having a first spectral characteristic; and the second pixel comprises a second photoelectric conversion unit that photoelectrically converts light incident via a filter having a second spectral characteristic that is different from the first spectral characteristic.
(1-11) The image capturing device as described in any one of (1-1) through (1-10) above, wherein a plurality of the first pixels are disposed in the first region; and a plurality of the second pixels are disposed in the second region.
(1-12) The image capturing device as described in any one of (1-1) through (1-10) above, wherein a single first pixel is disposed in the first region, and a single second pixel is disposed in the second region.
(1-13) An image capturing device, comprising: a first image capturing element comprising a first image capturing area that captures an image of a photographic subject, that is an area in which are disposed a first pixel that outputs a signal of charges generated by photoelectric conversion and a second pixel, different from the first pixel, that outputs a signal of charges generated by photoelectric conversion; a second image capturing element that is different from the first image capturing element, and that comprises a second image capturing area that captures an image of the photographic subject, that is an area in which is disposed a third pixel that outputs a signal of charges generated by photoelectric conversion; a selection unit that selects a pixel to be employed for interpolation of the first pixel, from among the second pixel and the third pixel; and a generation unit that generates an image of at least a part of a photographic subject that has been captured on the first image capturing area by employing the signal outputted from the first pixel and interpolated with the signal outputted from the pixel selected by the selection unit.
(1-14) The image capturing device as described in (1-13) above, further comprising a setting unit that sets an image capture condition for a first region in the first image capturing area in which the first pixel is disposed, an image capture condition for a second region in the first image capturing area, different from the first region, in which the second pixel is disposed, and an image capture condition for the second image capturing area in which the third pixel is disposed.
(1-15) The image capturing device as described in (1-14) above, wherein the selection unit selects a pixel to be employed for interpolation of the first pixel of the first region to which a first image capture condition is set by the setting unit, from among the second pixel of the second region to which a second image capture condition that is different from the first image capture condition is set by the setting unit, and the third pixel of the second image capturing area to which a third image capture condition that is different from the second image capture condition is set by the setting unit.
(1-16) The image capturing device as described in (1-15) above, wherein the selection unit selects a pixel to be employed for interpolation of the first pixel of the first region to which the first image capture condition is set by the setting unit, from among the second pixel of the second region to which the second age capture condition that is different from the first image capture condition is set and the third pixel of the second image capturing area to which the third image capture condition is set by the setting unit, based on the difference between the first image capture condition and the second image capture condition and the difference between the first image capture condition and the third image capture condition.
(1-17) The image capturing device as described in (1-16) above, wherein the selection unit selects a pixel to be employed for interpolation of the first pixel of the first region to which the first image capture condition is set by the setting unit, from among the second pixel of the second region to which the second image capture condition is set by the setting unit and the third pixel of the second image capturing area to which the third image capture condition is set by the setting unit, the selected pixel being from the region for which the difference between the first image capture condition and the second image capture condition, and the difference between the first image capture condition and the third image capture condition is smaller.
(1-18) The image capturing device as described in (1-15) above, wherein the selection unit selects a pixel to be employed for interpolation of the first pixel of the first region to which the first image capture condition is set by the setting unit, from among the second pixel of the second region to which the second image capture condition is set by the setting unit the third pixel of the second image capturing area to which the third image capture condition is set by the setting nit, based on the difference between the first image capture condition and the second image capture condition and the difference between the first image capture condition and the third image capture condition.
(1-19) The image capturing device as described in (1-18) above, wherein the selection unit selects a pixel to be employed for interpolation of the first pixel of the first region to which the first image capture condition is set by the setting unit, from among the pixel of the second region to which the second image capture condition is set by the setting unit and the third pixel of the second image capturing area to which the third image capture condition is set by the setting unit, the selected pixel being from the region for which the difference between the first image capture condition and the second image capture condition, and the difference between the first image capture condition and the third image capture condition is smaller.
(1-20) The image capturing device as described in any one of (1-13) through (1-19) above, wherein the first pixel comprises a first photoelectric conversion unit that photoelectrically converts light incident via a filter having a first spectral characteristic, and the second pixel and the third pixel comprise second photoelectric conversion units that photoelectrically convert light incident via filters having a second spectral characteristic that is different from the first spectral characteristic.
(1-21) The image capturing device as described in any one of (1-13) through (1-20) above, wherein a plurality of the first pixels are disposed in the first region, and a plurality of the second pixels are disposed in the second region.
(1-22) The image capturing device as described in any one of (1-13) through (1-20) above, wherein a single first pixel is disposed in the first region, and a single second pixel is disposed in the second region.
(1-23) An image capturing device, comprising: an image capturing element comprising an image capturing area that captures an image of a photographic subject, in which are disposed a first pixel that outputs a signal of charges generated by photoelectric conversion and second pixels, different from the first pixel, that output signals of charges generated by photoelectric conversion; a setting unit that sets an image capture condition for a first region of the image capturing area in which the first pixel is disposed and an image capture condition for a second region of the image capturing area, different from the first region, in which the second pixels are disposed; a selection unit that selects a pixel to be employed for signal processing of a signal outputted from the first pixel of the first region to which a first image capture condition is set by the setting unit, from among a second pixel of the second region to which a second image capture condition that is different from the first image capture condition is set by the setting unit, and a second pixel of the second region to which a third image capture condition that is different from the second image capture condition is set by the setting unit; and a generation unit that generates an image of at least a part of a photographic subject that has been captured on the image capturing area by employing the signal that is outputted from the first pixel of the first region to which first image capture condition is set, and that is processed with a signal outputted from the second pixel selected by the selection unit.
(1-24) An image capturing device, comprising: a first image capturing element comprising a first image capturing area that captures an image of a photographic subject, that is a region in which are disposed a first pixel that generates a signal of charges by photoelectric conversion and a second pixel, different from the first pixel, that generates a signal of charges by photoelectric conversion; a second image capturing element that is different from the first image capturing element, and comprising a second image capturing area that captures an image of the photographic subject, that is a region in which is disposed a third pixel that outputs a signal of charges generated by photoelectric conversion; a selection unit that selects a pixel to be employed for signal processing of the signal outputted from the first pixel, from among the second pixel and the third pixel; and a generation unit that generates an image of at least a part of a photographic subject that has been captured on the first image capturing area by employing the signal that is outputted from the first pixel, and that is processed with the signal outputted from the pixel selected by the selection unit.
(1-25) An image processing device, comprising: a selection unit that selects a pixel to be employed for interpolation of a first pixel that is disposed in a first region of an image capturing area of an image capturing element, to which a first image capture condition is set, from among a second pixel that is disposed in a second region of the image capturing area, to which a second image capture condition that is different from the first image capture condition is set, and a second pixel that is disposed in the second region of the image capturing area, to which a third image capture condition that is different from the second image capture condition is set; and a generation unit that generates an image of at least a part of a photographic subject that has been captured on the image capturing area by employing a signal that is outputted from the first pixel of the first region to which the first image capture condition is set, and that is interpolated with the signal outputted from the second pixel selected by the selection unit.
(1-26) An image processing device, comprising: a selection unit that selects a pixel to be employed for interpolation of a first pixel that is disposed in a first image capturing area of a first image capturing element, from among a second pixel that is disposed in the first image capturing area and that is different from the first pixel, and a third pixel that is disposed in a second image capturing area of a second image capturing element that is different from the first image capturing element; and a generation unit that generates an image of at least a part of a photographic subject that has been captured on the first image capturing area by employing a signal that is outputted from the first pixel, and that is interpolated with a signal outputted from the pixel selected by the selection unit.
(1-27) An image processing device, comprising: a selection unit that selects a pixel to be employed for signal processing of a signal outputted from a first pixel that is disposed in a first region of an image capturing area of an image capturing element, to which a first image capture condition is set, from among a second pixel that is disposed in a second region of the image capturing area, to which a second image capture condition that is different from the first image capture condition is set, and a second pixel that is disposed in the second region to which a third image capture condition that is different from the second image capture condition is set; and a generation unit that generates an image of at least a part of a photographic subject that has been captured on the image capturing area by employing a signal that is outputted from the first pixel of the first region to which the first image capture condition is set, and that is processed with a signal outputted from the second pixel selected by the selection unit.
(1-28) An image processing device, comprising: a selection unit that selects a pixel to be employed for signal processing of a signal outputted from a first pixel that is disposed in a first image capturing area of a first image capturing element, from among a second pixel that is different from the first pixel and that is disposed in the first image capturing area, and a third pixel that is disposed in a second image capturing area of a second image capturing element that is different from the first image capturing element; and a generation unit that generates an image of at least a part of a photographic subject that has been captured on the first image capturing area by employing a signal that is outputted from the first pixel, and that is processed with a signal outputted from the pixel selected by the selection unit.

Furthermore, image capturing devices and image processing devices such as described below are also included in the embodiments and variant embodiments described above.
(2-1) An image processing device, comprising: an input unit that inputs first image data that is captured by setting first image capture condition for a first region of the image capturing surface of an image capturing unit and by also setting a second image capture condition that is different from the first image capture condition for a second region of the image capturing surface, and second image data that is captured by setting a third image capture condition for the first region and for the second region; and a processing unit that performs image processing by employing the second image data upon first partial image data in the first image data corresponding to the first region.
(2-2) The image processing device as described in (2-1), wherein the processing unit performs the image processing on boundary portion data in the first partial image data, corresponding to a boundary portion between the first region and the second region, by employing the second image data.
(2-3) The image processing device as described in (2-2), wherein the processing unit performs the image processing on the boundary portion data of the first partial image data, by employing partial second image data, in the second image data, corresponding to at least the second region.
(2-4) The image processing device as described in (2-3), wherein the processing unit, when performing the image processing upon a pixel in the boundary portion data of the first image data by using reference pixels which are reference pixels surrounding the pixel and corresponding to the first region and to the second region, employs the second partial image data at positions corresponding to the positions of the reference pixels in the first image data as the reference pixel corresponding to the second region in the image processing.
(2-5) The image processing device as described in (2-4), wherein the processing unit further employs the first partial image data at the positions of the reference pixels as the reference pixels corresponding to the first region in the first image data in the image processing.
(2-6) The image processing device as described in (2-4), wherein the processing unit employs the second image data at the positions corresponding to the positions of the reference pixels in the first image data as the reference pixels corresponding to the first region in the first image data in the image processing.
(2-7) The image processing device as described in any one of (2-1) through (2-6), wherein the third image capture condition is the same as the first image capture condition.
(2-8) The image processing device as described in any one of (2-1) through (2-7), wherein the image capturing unit comprises a plurality of image capturing pixels, and, as the image processing, the processing unit performs at least one of image capturing pixel defect correction processing, color correction processing, contour emphasis processing, and noise reduction processing.
(2-9) An image capturing device, comprising: an image capturing unit that performs first image capture to capture first image data by setting a first image capture condition for a first region in an image capturing surface and by setting a second image capture condition that is different from the first image capture condition for a second region in the image capturing surface, and that performs second image capture to capture second image data by setting a third image capture condition for the first region and for the second region; and a processing unit that performs image processing upon first partial image data corresponding to the first region in the first image data by employing the second image data.
(2-10) The image capturing device as described in (2-9), wherein the processing unit performs the image processing on boundary portion data in the first partial image data corresponding to a boundary portion between the first region and the second region by employing the second image data.
(2-11) The image capturing device as described in (2-10), wherein the processing unit performs the image processing on the boundary portion data in the first partial image data by employing at least partial second image data in the second image data corresponding to the second region.
(2-12) The image capturing device as described in (2-11), wherein, when performing the image processing on a pixel in the boundary portion data of the first image data by employing reference pixels that surround the pixel and that correspond to the first region and to the second region, the processing unit employs as the reference pixels corresponding to the second region the second partial image data at positions corresponding to positions of the reference pixels in the first image data in the image processing.
(2-13) The image capturing device as described in (2-12), wherein, as the reference pixels corresponding to the first region in the first image data, the processing unit further employs the above first partial image data at the positions of the reference pixels in the image processing.
(2-14) The image capturing device as described in (2-12), wherein, as the reference pixels corresponding to the first region in the first image data, the processing unit further employs, in the image processing, the second partial image data at positions corresponding to the positions of the reference pixels in the first image data.
(2-15) The image capturing device as described in any one of (2-9) through (2-14), wherein the third image capture condition is the same as the first image capture condition.
(2-16) The image capturing device as described in any one of (2-9) through (2-15), wherein, as the image processing, the processing unit performs at least one of defect correction of image capturing pixels comprised in the image capturing unit, color correction processing, contour emphasis processing, and noise reduction processing.
(2-17) The image capturing device as described in any one of (2-9) through (2-16), further comprising a control unit that controls the timing at which the first image capture is performed and the timing at which the second image capture is performed by the image capturing unit.
(2-18) The image capturing device as described in (2-17), further comprising a display processing unit that causes an image to be displayed on a display unit on the basis of image data captured by the image capturing unit, and wherein, in the state in which preparation has been made for image capture, the image capturing unit performs third image capture to capture the image data for a plurality of frames, and the display processing unit causes the display unit to display images of the plurality of frames imaged by the third image capture.
(2-19) The image capturing device as described in (2-18), wherein the control unit causes the image capturing unit to perform the second image capture to capture at least one frame of the second image data between frames of the third image capture.
(2-20) The image capturing device as described in (2-19), wherein before causing the image capturing unit to start the third image capture in the state in which preparation has been made for image capture, or each time a predetermined number of frames of the third image capture are performed after causing the image capturing unit to start the third image capture, the control unit causes the image capturing unit to perform the second image capture to capture at least one frame of the second image data.
(2-21) The image capturing device as described in (2-19), wherein, when a command for the first image capture has been issued, the control unit causes the image capturing unit to capture at least one frame of the second image data, before the image capturing unit performs the first image capture, or after the image capturing unit has performed the first image capture.
(2-22) The image capturing device as described in (2-21), wherein, after the first image capture by the image capturing unit has been ended, the control unit causes the image capturing unit to capture at least one frame of the second image data, before the display processing unit causes the display unit to display images of the plurality of frames captured by the third image capture.
(2-23) The image capturing device as described in any one of (2-17) through (2-21), wherein, when a command is issued corresponding to image capture, including a command for preparation for the first image capture and a command for the first image capture, the control unit causes the image capturing unit to perform the second image capture to capture the second image data.
(2-24) The image capturing device as described in (2-23), wherein, while a command actuation for preparation for the first image capture is being performed, the control unit causes the image capturing unit to capture at least one frame of the second image data.
(2-25) The image capturing device as described in (2-23), wherein, when a command is issued for the first image capture, the control unit causes the image capturing unit to capture at least one frame of the second image data, before the image capturing unit performs the first image capture, or after the image capturing unit has performed the first image capture.
(2-26) The image capturing device as described in any one of (2-17) through (2-25), wherein, when a command is issued for capture of the second image data, the control unit causes the image capturing unit to perform the second image capture and to capture at least one frame of the second image data.
(2-27) The image capturing device as described in any one of (2-17) through (2-26), further comprising a detection unit that detects change in the environment while the image capturing unit captures images of the photographic subject, and wherein if, on the basis of the output of the detection unit, a change occurs in the environment of the photographic subject that is being imaged, the control unit causes the image capturing unit to capture the second image data.
(2-28) The image capturing device as described in any one of (2-11) through (2-26), wherein the image capturing unit performs capture of the second image data over a partial region of the image capturing surface.
(2-29) The image capturing device as described in (2-28), wherein the image capturing unit performs capture of the second image data over a region that is positioned in the central portion of the image capturing surface, or over a region whose position is commanded.
(2-30) The image capturing device as described in any one of (2-11) through (2-28), wherein, when performing the second image capture for a plurality of frames, the image capturing unit keeps the third image capture condition the same, or makes it be different, over the plurality of frames.
(2-31) The image capturing device as described in (2-30), wherein, when performing the second image capture for a plurality of frames, the image capturing unit captures the second image data for the next frame under the third image capture condition that is set on the basis of the second image data acquired in the previous frame of the plurality of frames.
(2-32) The image capturing device as described in any one of (2-11) through (2-31), wherein, when actuation is performed to specify an image capture condition, the image capturing unit performs capture of the second image data by setting the specified image capture condition as the third image capture condition.

The content of the disclosure of the following application, upon which priority is claimed, is hereby incorporated herein by reference:
Japanese Patent Application No. 2015-195137 (filed on 30 September 2015).

### REFERENCE SIGNS LIST

- 1: camera
- 1B: image capturing system
- 32: image capturing unit
- 32a, 100: imaging elements
- 33: image processing unit
- 33a: input unit
- 33b: processing unit
- 34: control unit
- 34a: object detection unit
- 34b: setting unit
- 34c: image capturing control unit
- 34d: AF calculation unit
- 35: display unit
- 38: photometric sensor
- 90: range for attention
- 100: laminated type imaging element
- 1001: image capturing device
- 1002: display device
- P: pixel for attention
- Pr: reference pixels

## Claims

1. An image capturing device, comprising:
an image capturing element comprising an image capturing area that captures an image of a photographic subject, in which a first pixel that outputs a signal of charges generated by photoelectric conversion and a second pixel, different from the first pixel, that outputs a signal of charges generated by photoelectric conversion of charge are disposed;
a setting unit that sets an image capture condition for a first region of the image capturing area in which the first pixel is disposed and an image capture condition for a second region of the image capturing area, different from the first region, in which the second pixel is disposed;
a selection unit that selects a pixel to be employed for interpolation of the first pixel of the first region to which a first image capture condition is set by the setting unit, from the second pixel of the second region to which a second image capture condition that is different from the first image capture condition is set by the setting unit, and the second pixel of the second region to which a third image capture condition that is different from the second image capture condition is set by the setting unit; and
a generation unit that generates an image of at least a part of a photographic subject that has been captured on the image capturing area by employing the signal that is outputted from the first pixel of the first region to which the first image capture condition is set, and that is interpolated with the signal outputted from the second pixel selected by the selection unit.

2. The image capturing device according to Claim 1, wherein
the selection unit selects the pixel to be employed for interpolation of the first pixel of the first region to which the first image capture condition is set by the setting unit, from the second pixel of the second region to which the second image capture condition is set by the setting unit and the second pixel of the second region to which the third image capture condition is set by the setting unit, based on a difference between the first image capture condition and the second image capture condition and a difference between the first image capture condition and the third image capture condition.

3. The image capturing device according to Claim 2, wherein
the selection unit selects, as the pixel to be employed for interpolation of the first pixel of the first region to which the first image capture condition is set by the setting unit, the second pixel of the second region to which image capture condition having a smaller difference is set, among the difference between the first image capture condition and the second image capture condition, and the difference between the first image capture condition and the third image capture condition.

4. The image capturing device according to Claim 1, wherein
the selection unit selects the pixel to be employed for interpolation of the first pixel of the first region to which the first image capture condition is set by the setting unit, from the second pixel of the second region to which the second image capture condition is set by the setting unit and the second pixel of the second region to which the third image capture condition is set by the setting unit, based on variance between the first image capture condition and the second image capture condition and variance between the first image capture condition and the third image capture condition.

5. The image capturing device according to Claim 4, wherein
the selection unit selects, as the pixel to be employed for interpolation of the first pixel of the first region to which the first image capture condition is set by the setting unit, the second pixel of the second region to which image capture condition having smaller variance is set, among the variance between the first image capture condition and the second image capture condition, and the variance between the first image capture condition and the third image capture condition.

6. The image capturing device according to any one of Claims 1 through 5, further comprising:
a storage unit that stores the signal outputted from the second pixel, wherein:
the setting unit sets to the second region the third image capture condition, before setting the second image capture condition to the second region; and
the storage unit stores the signal outputted from the second pixel of the second region to which the third image capture condition is set by the setting unit.

7. The image capturing device according to Claim 6, wherein
the setting unit sets the first image capture condition for the first region, after setting the third image capture condition for the second region.

8. The image capturing device according to any one of Claims 1 through 5, further comprising:
a storage unit that stores the signal outputted from the second pixel, wherein:
the setting unit sets to the second region the third image capture condition, after setting the second image capture condition to the second region; and
the storage unit stores the signal outputted from the second pixel of the second region to which the second image capture condition is set by the setting unit.

9. The image capturing device according to Claim 8, wherein
the setting unit sets the first image capture condition for the first region, before setting the third image capture condition for the second region.

10. The image capturing device according to any one of Claims 1 through 9, wherein:
the first pixel comprises a first photoelectric conversion unit that photoelectrically converts light incident via a filter having a first spectral characteristic; and
the second pixel comprises a second photoelectric conversion unit that photoelectrically converts light incident via a filter having a second spectral characteristic that is different from the first spectral characteristic.

11. The image capturing device according to any one of Claims 1 through 10, wherein:
a plurality of first pixels, each identical to the first pixel, are disposed in the first region; and
a plurality of second pixels, each identical to the second pixel, are disposed in the second region.

12. The image capturing device according to any one of Claims 1 through 10, wherein:
a single first pixel is disposed in the first region; and
a single second pixel is disposed in the second region.

13. An image capturing device, comprising:
a first image capturing element that comprises a first image capturing area that captures an image of a photographic subject, in which a first pixel that outputs a signal of charges generated by photoelectric conversion and a second pixel, different from the first pixel, that outputs a signal of charges generated by photoelectric conversion are disposed;
a second image capturing element that is different from the first image capturing element, and comprises a second image capturing area that captures an image of the photographic subject, in which a third pixel that outputs a signal of charges generated by photoelectric conversion is disposed;
a selection unit that selects a pixel to be employed for interpolation of the first pixel, from the second pixel and the third pixel; and
a generation unit that generates an image of at least a part of the photographic subject that has been captured on the first image capturing area by employing the signal that is outputted from the first pixel and that is interpolated with the signal outputted from the pixel selected by the selection unit.

14. The image capturing device according to Claim 13, further comprising:
a setting unit that sets an image capture condition for a first region in the first image capturing area in which the first pixel is disposed, an image capture condition for a second region in the first image capturing area, different from the first region, in which the second pixel is disposed, and an image capture condition for the second image capturing area in which the third pixel is disposed.

15. The image capturing device according to Claim 14, wherein
the selection unit selects a pixel to be employed for interpolation of the first pixel of the first region to which a first image capture condition is set by the setting unit, from the second pixel of the second region to which a second image capture condition that is different from the first image capture condition is set by the setting unit, and the third pixel of the second image capturing area to which a third image capture condition that is different from the second image capture condition is set by the setting unit.

16. The image capturing device according to Claim 15, wherein
the selection unit selects the pixel to be employed for interpolation of the first pixel of the first region to which the first image capture condition is set by the setting unit, from the second pixel of the second region to which the second image capture condition that is different from the first image capture condition is set by the setting unit and the third pixel of the second image capturing area to which the third image capture condition is set by the setting unit, based on a difference between the first image capture condition and the second image capture condition and a difference between the first image capture condition and the third image capture condition.

17. The image capturing device according to Claim 16, wherein
the selection unit selects, as the pixel to be employed for interpolation of the first pixel of the first region to which the first image capture condition is set by the setting unit, the second pixel of the second region to which the second image capture condition is set by the setting unit or the third pixel of the second image capturing area to which the third image capture condition is set by the setting unit, to which an image capture condition having a smaller difference is set among a difference between the first image capture condition and the second image capture condition, and a difference between the first image capture condition and the third image capture condition.

18. An image capturing device according to Claim 15, wherein
the selection unit selects the pixel to be employed for interpolation of the first pixel of the first region to which the first image capture condition is set by the setting unit, from the second pixel of the second region to which the second image capture condition is set by the setting unit and the third pixel of the second image capturing area to which the third image capture condition is set by the setting unit, based on variance between the first image capture condition and the second image capture condition and variance between the first image capture condition and the third image capture condition.

19. The image capturing device according to Claim 18, wherein
the selection unit selects, as the pixel to be employed for interpolation of the first pixel of the first region to which the first image capture condition is set, the second pixel of the second region to which the second image capture condition is set by the setting unit or the third pixel of the second image capturing area to which the third image capture condition is set by the setting unit, to which an image capture condition having smaller variance is set among variance between the first image capture condition and the second image capture condition, and variance between the first image capture condition and the second image capture condition.

20. The image capturing device according to any one of Claims 13 through 19, wherein:
the first pixel comprises a first photoelectric conversion unit that photoelectrically converts light incident via a filter having a first spectral characteristic; and
the second pixel and the third pixel comprise second photoelectric conversion units that photoelectrically convert light incident via filters having a second spectral characteristic that is different from the first spectral characteristic.

21. The image capturing device according to any one of Claims 13 through 20, wherein:
a plurality of first pixels, each identical to the first pixel, are disposed in the first region; and
a plurality of second pixels, each identical to the second pixel, are disposed in the second region.

22. The image capturing device according to any one of Claims 13 through 20, wherein:
a single first pixel is disposed in the first region; and
a single second pixel is disposed in the second region.

23. An image capturing device, comprising:
an image capturing element that comprises an image capturing area that captures an image of a photographic subject, in which a first pixel that outputs a signal of charges generated by photoelectric conversion and a second pixel, different from the first pixel, that outputs a signal of charges generated by photoelectric conversion;
a setting unit that sets an image capture condition for a first region of the image capturing area in which the first pixel is disposed and an image capture condition for a second region of the image capturing area, different from the first region, in which the second pixel is disposed;
a selection unit that selects a pixel to be employed for signal processing of the signal outputted from the first pixel of the first region to which a first image capture condition is set by the setting unit, from the second pixel of the second region to which a second image capture condition that is different from the first image capture condition is set by the setting unit, and the second pixel of the second region to which a third image capture condition that is different from the second image capture condition is set by the setting unit; and
a generation unit that generates an image of at least a part of a photographic subject that has been captured on the image capturing area by employing the signal that is outputted from the first pixel of the first region to which the first image capture condition is set, and that is processed with the signal outputted from the second pixel selected by the selection unit.

24. An image capturing device, comprising:
a first image capturing element that comprises a first image capturing area that captures an image of a photographic subject, in which are disposed a first pixel that generates a signal of charges by photoelectric conversion and a second pixel, different from the first pixel, that generates a signal of charges by photoelectric conversion;
a second image capturing element that is different from the first image capturing element, and that comprises a second image capturing area that captures an image of the photographic subject, in which a third pixel that outputs a signal of charges generated by photoelectric conversion is disposed;
a selection unit that selects a pixel to be employed for signal processing of the signal outputted from the first pixel, from the second pixel and the third pixel; and
a generation unit that generates an image of at least a part of the photographic subject that has been captured on the first image capturing area by employing the signal that is outputted from the first pixel, and that is processed with the signal outputted from the pixel selected by the selection unit.

25. An image processing device, comprising:
a selection unit that selects a pixel to be employed for interpolation of a first pixel that is disposed in a first region of an image capturing area of an image capturing element to which a first image capture condition is set, from a second pixel that is disposed in a second region of the image capturing area to which a second image capture condition that is different from the first image capture condition is set, and the second pixel that is disposed in the second region to which a third image capture condition that is different from the second image capture condition is set; and
a generation unit that generates an image of at least a part of a photographic subject that has been captured on the image capturing area by employing a signal that is outputted from the first pixel of the first region to which the first image capture condition is set, and that is interpolated with a signal outputted from the second pixel selected by the selection unit.

26. An image processing device, comprising:
a selection unit that selects a pixel to be employed for interpolation of a first pixel that is disposed in a first image capturing area of a first image capturing element, from a second pixel that is disposed in the first image capturing area and that is different from the first pixel, and a third pixel that is disposed in a second image capturing area of a second image capturing element that is different from the first image capturing element; and
a generation unit that generates an image of at least a part of a photographic subject that has been captured on the first image capturing area by employing a signal that is outputted from the first pixel, and that is interpolated with a signal outputted from the pixel selected by the selection unit.

27. An image processing device, comprising:
a selection unit that selects a pixel to be employed for signal processing of a signal outputted from a first pixel that is disposed in a first region of an image capturing area of an image capturing element to which a first image capture condition is set, from a second pixel that is disposed in a second region of the image capturing area to which a second image capture condition that is different from the first image capture condition is set, and the second pixel that is disposed in the second region to which a third image capture condition that is different from the second image capture condition is set; and
a generation unit that generates an image of at least a part of a photographic subject that has been captured on the image capturing area by employing a signal that is outputted from the first pixel of the first region to which the first image capture condition is set, and that is processed with a signal outputted from the second pixel selected by the selection unit.

28. An image processing device, comprising:
a selection unit that selects a pixel to be employed for signal processing of a signal outputted from a first pixel that is disposed in a first image capturing area of a first image capturing element, from a second pixel that is disposed in the first image capturing area and that is different from the first pixel, and a third pixel that is disposed in a second image capturing area of a second image capturing element that is different from the first image capturing element; and
a generation unit that generates an image of at least a part of a photographic subject that has been captured on the first image capturing area by employing a signal that is outputted from the first pixel, and that is processed with a signal outputted from the pixel selected by the selection unit.
